(19) **Europäisches Patentamt / European Patent Office / Office européen des brevets**

(11) **EP 4 382 247 B1**

(12) **EUROPÄISCHE PATENTSCHRIFT**

(45) Veröffentlichungstag und Bekanntmachung des Hinweises auf die Patenterteilung:
**29.07.2026   Patentblatt 2026/31**

(21) Anmeldenummer: **23211031.2**

(22) Anmeldetag: **21.11.2023**

(51) Internationale Patentklassifikation (IPC):
**B23Q 15/18** (2006.01)   **B25J 9/16** (2006.01)
**B23K 11/25** (2006.01)   **B23K 11/11** (2006.01)
**B23K 11/31** (2006.01)   *G05B 19/404* (2006.01)

(52) Gemeinsame Patentklassifikation (CPC):
**B23Q 15/18; B23K 11/115; B23K 11/253;**
**B23K 11/255; B23K 11/314; B25J 9/1633;**
G05B 19/404; G05B 2219/37374;
G05B 2219/39321; G05B 2219/41217;
G05B 2219/41219; G05B 2219/45104;
G05B 2219/45135; G05B 2219/49166;
G05B 2219/49186

(54) **VORRICHTUNG UND VERFAHREN ZUR POSITIONSREGELUNG EINES ZANGENFÖRMIGEN WERKZEUGS**

DEVICE AND METHOD FOR ADJUSTING THE POSITION OF A PLIER-SHAPED TOOL

DISPOSITIF ET PROCÉDÉ DE RÉGLAGE DE POSITION D'UN OUTIL EN FORME DE PINCE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **08.12.2022   DE 102022213307**

(43) Veröffentlichungstag der Anmeldung:
**12.06.2024   Patentblatt 2024/24**

(73) Patentinhaber: **Robert Bosch GmbH**
**70442 Stuttgart (DE)**

(72) Erfinder:
• **Wohner, Maximilian**
**64720 Michelstadt (DE)**
• **Mader, Andreas**
**64720 Michelstadt (DE)**
• **Zeller, Sebastian**
**64753 Brombachtal (DE)**
• **Haeufgloeckner, Juergen**
**63936 Schneeberg (DE)**

(56) Entgegenhaltungen:
**DE-A1- 102015 013 987      DE-T2- 60 206 893**

**Beschreibung**

Die vorliegende Erfindung bezieht sich auf eine Vorrichtung und ein Verfahren zur Positionsregelung eines zangenförmigen Werkzeugs, das insbesondere eine Schweißzange oder eine Zange zum Clinchen oder Stanznieten ist.

Zangenförmige Werkzeuge werden beispielsweise bei Fügevorgängen, wie Schweißen, Clinchen, Nieten, usw., oder bei einem Transport von Bauteilen eingesetzt. Schweißwerkzeuge werden eingesetzt, um metallische Teile durch Schweißen zu verbinden. Beispielsweise werden in industriellen Anlagen, insbesondere in Fertigungsstraßen für Fahrzeuge usw., metallische Teile, insbesondere Bleche, durch Schweißen mit Hilfe eines Schweißwerkzeugs verbunden. Dabei wird das vom Schweißwerkzeug durchgeführte Schweißverfahren von einer Schweißsteuerung gesteuert oder geregelt.

DE 602 06 893 T2 bezieht sich auf ein drehendes Reibungsschweißverfahren und Vorrichtung, bei dem ein rotierendes bzw. Drehwerkzeug in zu verbindende bzw. zu verschweißende Glieder gedrückt wird.

Widerstandspunktschweißen ist eines der am weitesten verbreiteten Schweißverfahren in der automatisierten Schweißtechnik und wird hauptsächlich in der automobilen Produktion eingesetzt, insbesondere beim automatisierten Karosserierohbau für ein Automobil oder ein sonstiges Fahrzeug. Beim Widerstands(punkt)schweißen werden die zu verschweißenden Bauteile an der zu verschweißenden Stelle mit zwei Schweißelektroden einer Schweißzange als Schweißwerkzeug mit einer vorbestimmten Kraft für eine vorbestimmte Zeit zusammengedrückt. Dadurch wird ein Stromkreis gebildet, in welchem mit einem speziellen Verlauf eines elektrischen Stroms zwischen den Bauteilen eine Schweißlinse ausgebildet wird.

Gemäß DE 10 2015 013 987 A1 werden hierbei die Stellungen einer Punktschweißpistole an einem zu schweißenden Objekt mehrmals geändert, wobei jeweils die Presskraft auf Grund einer beweglichen Elektrode der Punktschweißpistole durch einen Drucksensor in den jeweiligen Stellungen der Punktschweißpistole an dem zu schweißenden Objekt gemessen werden. Ein Teil zum Berechnen einer Druckänderung berechnet einen Änderungsbetrag zwischen einer ersten Presskraft in einer ersten Stellung und einer zweiten Presskraft in einer zweiten Stellung basierend auf einer ersten Position der beweglichen Elektrode, um eine Presskraft, die auf ein zu pressendes Objekt ausgeübt wird, konstant zu machen.

Solche Schweißzangen sind beispielsweise als servoelektrische Schweißzangen ausgestaltet, um die Kraft zum Zusammendrücken der Schweißzange zum Bilden des Schweißpunkts aufzubringen. Ist die Kraft zu groß, die in die Schweißzange eingeleitet wird, wird die Schweißzange beschädigt. Daher ist der Einsatz eines Kraftreglers vorteilhaft, um die in die Schweißzange eingeleitete Kraft derart zu dosieren, dass keine Beschädigungen an der Schweißzange bzw. dem Schweißwerkzeug auftreten.

Beim Widerstands(punkt)schweißen ist eine konstante Qualität der Schweißpunkte sehr wichtig, um die Anforderungen an die Festigkeit und damit die Sicherheit der hergestellten Schweißverbindung und so auch des zugehörigen Gegenstands bzw. Produkts erfüllen zu können.

Durch die steigenden Anforderungen an Fahrzeugsicherheit und Leichtbau ist stets ein Trend in Richtung einer Verwendung von neuen Materialien/Werkstoffen und/oder neuen Beschichtungen für die Fahrzeugkarossen zu erkennen. Hierbei kommen zudem immer wieder andere Bauteildicken zum Einsatz. Dadurch ändern sich jeweils die Rahmenbedingungen für die herzustellenden Schweißverbindungen.

Problematisch ist, dass für Bauteile mit derartigen neuen Materialdickenkombinationen eine deutliche Abnahme der Schweißeignung feststellbar ist. Dies geht darüber hinaus mit einer Verringerung der zeitlich zulässigen Dauer zum Schweißen einher. Dadurch verringert sich auch das mögliche Prozessfenster für den Schweißprozess. Bei Versuchen, die Herausforderung zu meistern, die geforderte konstante Qualität der Schweißpunkte zu realisieren, kamen die konventionellen Widerstandsschweißsysteme an ihre Prozessgrenzen.

Daher wurde auf Anmelderseite überlegt, die bisherige Regelung mit der Kraft als der Führungsgröße durch zusätzliche Freiheitsgrade zu erschließen oder zu erweitern. Denkbar ist hierfür beispielsweise die gezielte Überwachung und Regelung des Schweißprozesses mithilfe eines Wegsignals. Das Wegsignal gibt den Weg wieder, den die Schweißelektroden zum Herstellen einer Schweißverbindung, insbesondere eines Schweißpunkts, zurücklegen. Das Wegsignal enthält die Positionen, welche die Schweißelektroden für den Weg durchlaufen.

Für einen stabilen Produktionsprozess und eine gleichbleibende Schweißqualität ist vor allem die Signalgüte der Führungsgröße ausschlaggebend. Jedoch wird das Wegsignal neben elektrischen und mechanischen Einflussgrößen zudem durch die Position oder Anordnung eines Sensors zum Erfassen des Wegsignals und den Aufbau zum Erfassen des Wegsignals beeinflusst.

Problematisch ist, dass für einen Schweißvorgang eine optimale Erfassung des Wegsignals nur zwischen den beiden Schweißelektroden erzielt wird. In der Praxis ist dieser Ansatz nicht praktikabel, da sonst die Erfassung des Wegsignals das Herstellen der Schweißverbindung unterbinden würde. Entsprechendes gilt auch für das Fügen mit den anderen zuvor genannten Fügearten. Jede andere Position des Sensors liefert dagegen ein Wegsignal, dass bei der Verwendung für einen Schweißvorgang nicht die geforderte konstante Qualität der Schweißverbindungen liefert.

Zur Lösung dieses Problems könnte die Sensorik beispielsweise an dem beweglichen Zangenarm der Schweißzange angebracht werden. Nachteilig daran ist jedoch, dass das Wegsignal in diesem Fall von der mechanischen Zangenkonfiguration sowie der Position der Wegmessung abhängig ist. Somit ist jede einzelne mechanische Zangenkonfiguration zunächst aufwändig zu erfassen, um ein Wegsignal zu erhalten, mit dem ein stabiler Produktionsprozess und eine gleichbleibende Schweißqualität sichergestellt werden kann. Dies ist besonders nachteilig bei Schweißwerkzeugen, bei welchen die Schweißelektroden jeweils nach einer vorbestimmten Anzahl von Schweißvorgängen gereinigt werden müssen, wodurch sich die mechanische Zangenkonfiguration ändert.

Daher besteht die Aufgabe der vorliegenden Erfindung darin, eine Vorrichtung und ein Verfahren zur Positionsregelung eines zangenförmigen Werkzeugs bereitzustellen, mit welchen die zuvor genannten Probleme gelöst werden können. Insbesondere sollen eine Vorrichtung und ein Verfahren zur Positionsregelung eines zangenförmigen Werkzeugs bereitgestellt werden, bei welchen eine Regelung eines Arbeitsvorgangs mit dem Werkzeug, der beispielsweise ein Fügevorgang, insbesondere ein Schweißvorgang ist, trotz Aufbiegung des Werkzeugs zuverlässig durchführbar ist, so dass eine gleichbleibend hohe Qualität des Arbeitsergebnisses, beispielsweise der Fügeverbindung, insbesondere der Schweißverbindung, realisierbar ist.

Diese Aufgabe wird durch eine Vorrichtung zur Positionsregelung eines zangenförmigen Werkzeugs nach Anspruch 1 gelöst. Die Vorrichtung hat Vorrichtung ein Bestimmungsmodul zur Bestimmung eines normierten Wegsignals, in dem eine Aufbiegung des zangenförmigen Werkzeugs kompensiert ist, die durch Einwirken einer mechanischen Kraft ($F_s(t)$ auf das Werkzeug bei einem Arbeitsvorgang mit dem zangenförmigen Werkzeug erzeugt wird, und ein Kraftregelmodul zum Regeln eines Verlaufs der Kraft, welche das zangenförmige Werkzeug bei dem Arbeitsvorgang auf mindestens ein Bauteil ausübt, wobei das Kraftregelmodul ausgestaltet ist, den Verlauf der Kraft bei dem Arbeitsvorgang unter Verwendung des normierten Wegsignals zu regeln, wie in Anspruch 1 angegeben.

Die zuvor beschriebene Vorrichtung bietet für ein Schweißwerkzeug die Möglichkeit, mit einer gezielten Überwachung und Regelung des Schweißvorgangs mithilfe des Wegsignals eine hohe und gleichbleibende Qualität der hergestellten Schweißverbindungen sicherzustellen. Dies gilt insbesondere auch für Bauteile mit Materialdickenkombinationen, die bisher nur mit ungenügendem Ergebnis durch Schweißen verbindbar waren.

Hierfür ist die zuvor beschriebene Vorrichtung sehr vorteilhaft ausgestaltet, eine Kompensation der mechanischen Zangeneigenschaften und der Elektrodenkraft bezüglich des erfassten Wegsignals vorzunehmen.

Dadurch kann zum einen jeder Fügevorgang, insbesondere ein Schweißvorgang oder ein anderer Fügevorgang, bei Verwendung des bereinigten Wegsignals früher überwacht und geregelt werden. Etwaige auftretende produktionsbedingte Störgrößen können im bereinigten Wegsignal besser isoliert und detektiert werden. Zum anderem kann eine Referenzkurve unter Laborbedingungen erzeugt und nachfolgend in die Produktion und auf andere Zangenkonfigurationen übertragen werden.

Somit kann die zuvor beschriebene Vorrichtung während des Schweißens bzw. Schweißvorgangs als Fügevorgang eine Weg-Überwachung/Regelung für einen Schweißzangentyp sowie bei einem reproduzierbaren Elektrodenkraftverlauf gewährleisten. Dennoch ist diese Weg-Überwachung/Regelung alternativ für einen anderen (Schweiß) Zangentyp verwendbar, wobei dieselbe Fügequalität, insbesondere Schweißqualität, erreicht werden kann. Dabei sind Veränderungen des Zangentyps und/oder der Krafteinstellungen möglich, ohne dass diese zu einer Wegdiskrepanz und damit zu einem Schweißpunkt mit schlechterer Qualität führen.

Demzufolge ermöglicht die zuvor beschriebene Vorrichtung, einen einmal ermittelten Referenzwegverlauf sehr unaufwändig auf mindestens eine andere Zangenkonfiguration zu übertragen. Dies gilt auch, wenn ein abgeändertes Regelverhalten der Kraft zu einem anderen Wegverlauf der Schweißelektroden führt, was durch eine Aufbiegung der Zangenarme in Abhängigkeit des momentanen Kraftwertes hervorgerufen wird.

Die zuvor beschriebene Vorrichtung kompensiert somit bei einem Schweißvorgang, dass die Führungsgröße "Elektrodenweg" von den mechanischen Zangeneigenschaften und dem Kraftregelverhalten abhängig ist. Hierfür berücksichtigt und kompensiert die Schweißsteuerung die mechanischen Zangen- sowie Krafteigenschaften im Wegsignal, um eine zielführende und systemübergreifende Führungsgröße zu implementieren.

Damit ist ein Fügevorgang, insbesondere Schweißvorgang, nicht nur mit zeitlich veränderlicher Sollkraft, sondern auch mit zeitlich veränderbarer Sollposition, durchführbar, die individuell von einem Bediener vorgebbar oder parametrierbar ist. Hierbei ist eine automatische Parametrierung nicht nur des Kraftregelmoduls sondern auch des Wegregelmoduls möglich. Zusätzlich ist es möglich, Störgrößen auszuregeln, wie Schweißspritzer oder die wärmebedingte Ausdehnung des Schweißpunktes.

Im Ergebnis kommt es auch nicht zu Beschädigungen an dem zangenförmigen Werkzeug.

Als Folge davon sind weniger Fügevorgänge, insbesondere Schweißvorgänge, abzubrechen, so dass Ausfälle der Schweißanlage in der industriellen Anlage minimiert werden können. Außerdem wird sowohl der von einer industriellen Anlage produzierte Ausschuss vermindert als auch der Ausstoß der industriellen Anlage erhöht. Zudem wird mit der Vorrichtung die Lebensdauer des Werkzeugs signifikant verbessert. Noch dazu wird erreicht, dass kostenintensive Serviceeinsätze zur Behebung von Störungen einer Fügeanlage weniger häufig gefordert sind.

Vorteilhafte weitere Ausgestaltungen der Vorrichtung sind in den abhängigen Patentansprüchen angegeben.

Das normierte Wegsignal umfasst Positionen eines Wegs, den ein Element des zangenförmigen Werkzeugs bei dem Arbeitsvorgang des zangenförmigen Werkzeugs zurückzulegen hat.

Der Arbeitsvorgang ist möglicherweise ein Kraftskalieren ohne Bauteil oder eine Kurzschlussschweißung ohne Bauteil oder ein Reinigen, insbesondere Fräsen, von Schweißelektrodenkappen des zangenförmigen Werkzeugs.

In einer Ausgestaltung ist der Arbeitsvorgang ein Fügevorgang zum Herstellen einer Fügeverbindung mit dem zangenförmigen Werkzeug, wobei der Fügevorgang ein Schweißvorgang zum Herstellen einer Schweißverbindung mit dem zangenförmigen Werkzeug ist, oder ein Nietvorgang oder ein Clinchvorgang ist. Hierbei kann das Kraftregelmodul ausgestaltet sein, den Verlauf der Kraft beim Herstellen der Fügeverbindung unter Verwendung des normierten Wegsignals zu regeln.

In einer speziellen Ausgestaltung ist das Bestimmungsmodul ausgestaltet, das normierte Wegsignal $Sn(t)$ aus einem in Echtzeit erfassten Verlauf einer Kraft und einem in Echtzeit erfassten Weg zu bestimmen, den ein Element des zangenförmigen Werkzeugs vor und/oder bei Durchführung eines Fügevorgangs zurücklegt.

In noch einer speziellen Ausgestaltung ist das Bestimmungsmodul ausgestaltet, das normierte Wegsignal $Sn(t)$ aus einem in Echtzeit erfassten Verlauf einer Kraft und einem in Echtzeit erfassten Weg zu bestimmen, den ein Element des zangenförmigen Werkzeugs zur Durchführung des Arbeitsvorgangs zurücklegt.

Bei einem Ausführungsbeispiel umfasst das normierte Wegsignal Positionen eines Wegs, den ein Element des zangenförmigen Werkzeugs zurückzulegen hat bei einem Fügevorgang, bei welchem eine Fügeverbindung herzustellen ist, oder bei einem Servicevorgang, bei welchem das zangenförmige Werkzeug gereinigt oder in Betrieb gesetzt wird.

Denkbar ist, dass das Bestimmungsmodul ausgestaltet ist, mechanische Zangeneigenschaften des zangenförmigen Werkzeugs zu berechnen, wobei das Bestimmungsmodul ausgestaltet ist, die mechanischen Zangeneigenschaften zur Bestimmung des normierten Wegsignals aus dem in Echtzeit erfassten Verlauf einer Kraft und einem in Echtzeit für den Weg erfassten Wegsignal zu verwenden.

Noch dazu ist es möglich, dass das Bestimmungsmodul ausgestaltet ist, mechanische Zangeneigenschaften eines ersten zangenförmigen Werkzeugs zu verwenden für die Bestimmung eines normierten Wegsignals eines zweiten zangenförmigen Werkzeugs, wobei sich die mechanischen Zangeneigenschaften des zweiten zangenförmigen Werkzeugs von den mechanischen Zangeneigenschaften des ersten zangenförmigen Werkzeugs unterscheiden.

Darüber hinaus ist es möglich, dass ist die Vorrichtung zur Auswertung eines Steifigkeitsmodells einer Fügestelle ausgestaltet ist, wobei die Vorrichtung zum Abbruch des derzeit ausgeführten Arbeitsvorgangs ausgestaltet ist, wenn die Auswertung des Steifigkeitsmodells der Fügestelle ergibt, dass mindestens eine Störgröße und/oder ein vorbestimmter Zangenverschleiß vorhanden sind/ist.

Optional ist die die Vorrichtung ausgestaltet, eine Meldung auszugeben, wenn die Auswertung des Steifigkeitsmodells der Fügestelle ergibt, dass mindestens eine Störgröße und/oder ein vorbestimmter Zangenverschleiß vorhanden sind/ist.

Die zuvor beschriebene Schweißsteuerung kann Teil einer Schweißanlage sein, die zudem ein Schweißwerkzeug aufweist, das eine Schweißzange mit zwei Elektroden zum Herstellen einer Schweißverbindung an mindestens einem Bauteil ist, eine Antriebseinrichtung aufweist zum Antrieb des Schweißwerkzeugs zum Aufbringen einer Kraft, welche die zwei Elektroden beim Herstellen einer Schweißverbindung auf das mindestens ein Bauteil ausüben, und mindestens einen Kraftsensor aufweist, der an einem feststehenden Arm des Schweißwerkzeugs und/oder an einem beweglichen Arm des Schweißwerkzeug angebracht ist, wobei der bewegliche Arm relativ zu dem feststehenden Arm beweglich ist.

Die Aufgabe wird zudem durch ein Verfahren zur Positionsregelung eines zangenförmigen Werkzeugs nach Anspruch 14 gelöst. Das Verfahren hat die Schritte: Bestimmen, mit einem Bestimmungsmodul, eines normierten Wegsignals, in dem eine Aufbiegung des zangenförmigen Werkzeugs kompensiert ist, die durch Einwirken einer mechanischen Kraft auf das Werkzeug bei einem Arbeitsvorgang mit dem zangenförmigen Werkzeug erzeugt wird, und Regeln, mit einem Kraftregelmodul, eines Verlaufs der Kraft, welche das zangenförmige Werkzeug bei dem Arbeitsvorgang auf mindestens ein Bauteil ausübt, wobei das Kraftregelmodul ausgestaltet ist, den Verlauf der Kraft bei dem Arbeitsvorgang unter Verwendung des normierten Wegsignals zu regeln, wie in Anspruch 14 angegeben.

Das Verfahren erzielt die gleichen Vorteile, wie sie zuvor in Bezug auf die Vorrichtung genannt sind.

Der Schritt des Bestimmens und der Schritt des Regelns kann zumindest zeitweise bei der Durchführung des Arbeitsvorgangs durchgeführt werden.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:

Fig. 1 eine stark vereinfachte schematische Ansicht einer industriellen Anlage mit einer Schweißanlage als Beispiel für eine Fügeanlage mit einer Vorrichtung gemäß einem ersten Ausführungsbeispiel, bei welchem eine Schweißsteuerung zum Steuern eines Schweißwerkzeugs verwendet wird;

Fig. 2 eine Schnittansicht von Schweißelektroden des Schweißwerkzeugs gemäß dem ersten Ausführungsbeispiel;

Fig. 3 eine vereinfachte Darstellung einer C-Schweißzange gemäß dem ersten Ausführungsbeispiel nach Zustellung der Schweißelektroden an das mindestens eine zu schweißende Bauteil (Schweißgut);

Fig. 4 die C-Schweißzange von Fig. 3 in einem Zustand, der bei einer Kraftbeaufschlagung des Bauteils für oder bei einem Schweißvorgang oder bei einem Servicevorgang auftritt.

Fig. 5 ein erstes Beispiel für einen zeitlichen Verlauf eines Schweißstroms bei einem Schweißvorgang und ein von der Schweißsteuerung verwendetes normiertes Wegsignal der Schweißelektroden bei dem Schweißvorgang sowie im Vergleich ein in Echtzeit erfasstes Wegsignal der Schweißelektroden bei dem Schweißvorgang;

Fig. 6 eine Vergrößerung eines Teils der Darstellung von Fig. 5;

Fig. 7 ein Flussdiagramm eines Verfahrens zur Bestimmung der mechanischen Zangeneigenschaften des Schweißwerkzeugs;

Fig. 8 ein Flussdiagramm eines Verfahrens zur Kompensation der mechanischen Zangeneigenschaften des Schweißwerkzeugs in einer Vorhaltezeit zur Durchführung eines Schweißvorgangs;

Fig. 9 ein Flussdiagramm eines Verfahrens zur Kompensation der mechanischen Zangeneigenschaften des Schweißwerkzeugs während der Schweißzeit eines Schweißvorgang;

Fig. 10 ein Flussdiagramm eines Verfahrens zur Kompensation der mechanischen Zangeneigenschaften des Schweißwerkzeugs aufgrund von Informationen über Störgrößen bei einem Schweißvorgang;

Fig. 11 ein Flussdiagramm eines Verfahrens zur Durchführung eines Servicevorgangs für das Schweißwerkzeug, insbesondere einer Reinigung mit einer Reinigungseinrichtung;

Fig. 12 eine vereinfachte Darstellung einer X-Schweißzange gemäß einem zweiten Ausführungsbeispiel nach Zustellung der Schweißelektroden an das mindestens eine zu schweißende Bauteil (Schweißgut);

Fig. 13 die X-Schweißzange von Fig. 12 in einem Zustand, der bei einer Kraftbeaufschlagung des Bauteils für oder bei einem Schweißvorgang oder bei einem Servicevorgang auftritt.

Fig. 14 ein zweites Beispiel für einen zeitlichen Verlauf eines Schweißstroms bei einem Schweißvorgang und ein von der Schweißsteuerung verwendetes normiertes Wegsignal der Schweißelektroden bei dem Schweißvorgang sowie im Vergleich ein in Echtzeit erfasstes Wegsignal der Schweißelektroden bei dem Schweißvorgang;

Fig. 15 eine Vergrößerung eines Teils der Darstellung von Fig. 14;

Fig. 16 eine vereinfachte Darstellung einer C-Schweißzange gemäß einem dritten Ausführungsbeispiel nach Zustellung der Schweißelektroden an das mindestens eine zu schweißende Bauteil (Schweißgut);

In den Figuren sind gleiche oder funktionsgleiche Elemente, sofern nichts anderes angegeben ist, mit denselben Bezugzeichen versehen.

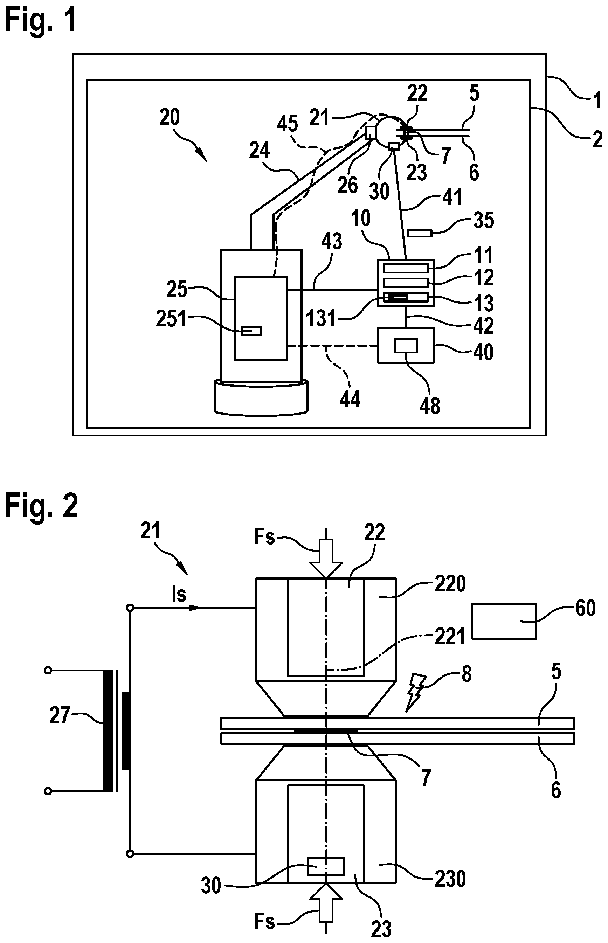

Fig. 1 zeigt eine industrielle Anlage 1 mit einer Fügeanlage 2. Die Fügeanlage 2 ist bei dem Beispiel von Fig. 1 eine Schweißanlage, die zum Schweißen von mindestens einem metallischen Bauteil 5, 6 verwendet wird. Hierbei wird das mindestens eine metallische Bauteil 5, 6 mit mindestens einer Schweißverbindung 7 verbunden. Die mindestens eine Schweißverbindung 7 ist beispielsweise ein Schweißpunkt und/oder eine Schweißnaht. Dabei können die zwei metallischen Bauteile 5, 6 oder auch nur zwei Ränder eines der Bauteile 5, 6 miteinander verbunden werden.

Die industrielle Anlage 1 ist beispielsweise eine Fertigungsstraße für Fahrzeuge, Möbel, Bauwerke, usw., in welcher die metallischen Bauteile 5, 6 geschweißt werden. Hierzu weist die Schweißanlage 2 eine Steuervorrichtung 10, die auch Schweißsteuerung genannt wird, eine Vorrichtung 20 zum Führen eines als Widerstandschweißwerkzeug ausgeführten Schweißwerkzeugs 21 mit zwei Schweißelektroden 22, 23, eine Erfassungseinrichtung 30 und eine Bedieneinrichtung 40 auf. Die Vorrichtung 20 wird von einer Steuereinrichtung 25 gesteuert. Zudem sind Kommunikationsleitungen 41 bis 45 vorgesehen, die insbesondere als Bussystem ausgeführt sein können. Mit der Bedieneinrichtung 40 sind Meldungen 48 ausgebbar, insbesondere Statusmeldungen und/oder Fehlermeldungen und/oder sonstige Informationen.

Die Steuervorrichtung 10 ist eine Vorrichtung zur Positionsregelung des Schweißwerkzeugs 21, das ein zangenförmiges Werkzeug ist.

Die Vorrichtung 20 ist insbesondere ein Roboter. Die Bedieneinrichtung 40 ist beispielsweise als Tastatur und/oder eine Maus, ein Laptop, ein berührungsempfindlicher oder berührungsunempfindlicher Bildschirm, usw. oder deren Kombinationen ausführbar.

Gemäß Fig. 1 ist das Schweißwerkzeug 21 eine Schweißzange mit mindestens einer Elektrode 22, 23. Insbesondere ist das Schweißwerkzeug 21 eine servoelektrische Schweißzange. Bei dem Beispiel von Fig. 1 ist die Schweißzange als eine C-Zange ausgebildet. Hierbei ist es möglich, dass einer der Zangenarme, an dessen Ende beispielsweise die Elektrode 22 angeordnet ist, ein beweglicher Zangenarm ist und der andere Zangenarm, an dessen Ende beispielsweise die Elektrode 23 angeordnet ist, ein feststehender Zangenarm ist. "Feststehend" bedeutet hier, dass der feststehende Zangenarm nicht direkt in eine Bewegung relativ zum beweglichen Arm antreibbar ist. Stattdessen wird der bewegliche Arm direkt angetrieben. An mindestens einem der Arme kann die Erfassungseinrichtung 30, insbesondere ihr Kraftsensor, vorgesehen sein. Die Elektroden 22, 23 sind vorzugsweise als wassergekühlte Elektrodenschäfte ausgeführt.

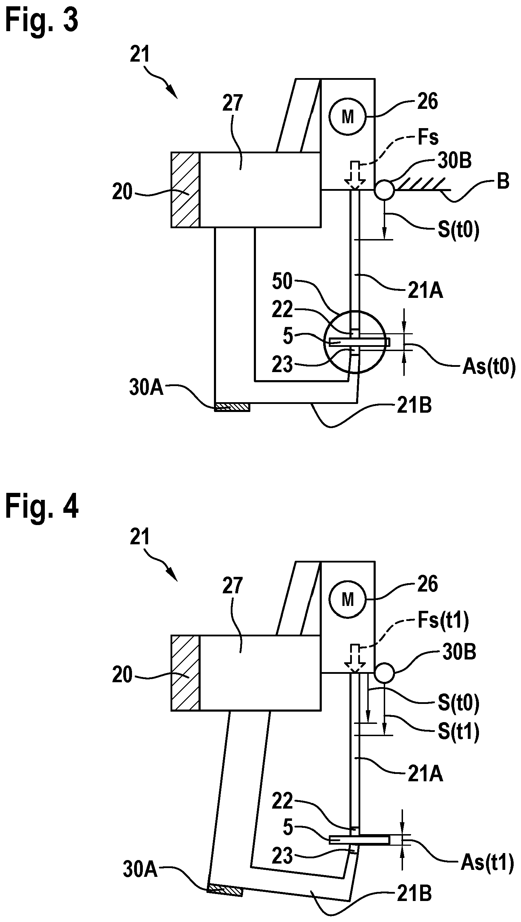

Die Schweißsteuerung 10 dient zur Steuerung des Schweißwerkzeugs 21. Daher ist die Steuervorrichtung 10 mit dem Schweißwerkzeug 21 bzw. dessen elektrischen Komponenten über die Kommunikationsleitung 41 verbunden. Die Steuervorrichtung 10 ist außerdem über die Kommunikationsleitung 42 mit der Bedieneinrichtung 40 verbunden. Zudem empfängt die Steuervorrichtung 10 über die Kommunikationsleitung 41 Daten 35, die beim Betrieb des Schweißwerkzeugs 21 von der Erfassungseinrichtung 30 erfasst wurden. Die Erfassungseinrichtung 30 hat hierzu mindestens einen Sensor zum Erfassen von physikalischen Größen, die beim Schweißen relevant sind und nachfolgend als die Daten 35 bezeichnet sind. Derartige physikalische Größen bzw. Daten 35 umfassen insbesondere eine Halte- und/oder Anpresskraft Fs zum Halten des Schweißwerkzeugs 21 an dem mindestens einen Bauteil 5, 6 und/oder Anpressen der Elektroden 22, 23 an das mindestens eine Bauteil 5, 6 beim Ausführen eines Schweißvorgangs zur Herstellung einer Schweißverbindung 7. Somit umfasst die Erfassungseinrichtung 30 insbesondere mindestens einen Kraftsensor. Zudem kann mindestens ein anderer Sensor umfasst sein, wie nachfolgend in Bezug auf Fig. 3 und Fig. 4 genauer beschrieben.

Die Steuervorrichtung 10 hat ein Bestimmungsmodul 11, ein Kraftregelmodul 12 und ein Speichermodul 13. Das Kraftregelmodul 12 verwendet Daten 35, 131 für die Kraft $F_s$, die in dem Speichermodul 13 gespeichert sind, wie nachfolgend noch genauer beschrieben.

Für die Steuerung eines Schweißvorgangs mit dem Schweißwerkzeug 21 sind in der Steuervorrichtung 10, genauer gesagt ihrem Speichermodul 13, zudem interne Grundparameter bzw. Sollwerte bzw. Daten 131 gespeichert, die entweder ab Werk oder später mit Hilfe der Bedieneinrichtung 40 von einem Benutzer eingegeben werden können. Die internen Grundparameter oder Sollwerte 131 können Parameter des Schweißwerkzeugs 21 sein. Zudem können die internen Grundparameter oder Sollwerte 131 Parameter der Steuervorrichtung 10 sein, mit welchen das Schweißwerkzeug 21 gesteuert wird. Insbesondere sind die internen Grundparameter oder Sollwerte 131 ein Phasenanschnitt eines Schweißstroms Is und/oder ein Widerstand R des Schweißwerkzeugs 21 und/oder die Halte- und/oder Anpresskraft Fs. Der Schweißstrom Is wird dem Schweißwerkzeug 21 durch einen in Fig. 1 nicht dargestellten Schweißtransformator zugeführt. Dies ist in Bezug auf Fig. 2 näher beschrieben. Alle internen Grundparameter oder Sollwerte 131 sind als zeitlich abhängige Größen oder Soll-Zeitverläufe der jeweiligen Sollgrößen speicherbar. Somit sind insbesondere ein Schweißstrom Is(t) und/oder ein Widerstand R(t) des Schweißwerkzeugs 21 und/oder die Halte- und/oder Anpresskraft Fs(t) speicherbar. Dabei sind kontinuierliche Zeitverläufe oder intermittierend festgelegte Zeitverläufe speicherbar.

Beim Führen des Schweißwerkzeugs 21 mit einem Arm 24 der Vorrichtung 20 wird die Vorrichtung 20 von ihrer Steuereinrichtung 25 gesteuert. Hierfür ist die Steuereinrichtung 25 mit der Steuervorrichtung 10 über die Kommunikationsleitung 43 verbunden. Optional ist die Steuereinrichtung 25 mit der Bedieneinrichtung 40 über eine Kommunikationsleitung 44 verbunden. Das Öffnen oder Schließen des Schweißwerkzeugs 21 erfolgt durch den Antrieb einer Antriebseinrichtung 26.

Zusätzlich oder alternativ ist die Steuereinrichtung 25 direkt mit der Erfassungseinrichtung 30 und/oder den elektrischen Komponenten des Schweißwerkzeugs 21 mit Hilfe einer Kommunikationsleitung 45 verbunden. Besteht kein Redundanzbedarf, ist es möglich, die Kommunikationsleitung 43 wegzulassen.

Über die Kommunikationsleitungen 42 bis 45 können relevante Daten für die Durchführung einer Schweißung mit dem Schweißwerkzeug 21 zwischen der Steuervorrichtung 10 und der Vorrichtung 20, genauer gesagt der Steuereinrichtung 25, und/oder der Bedieneinrichtung 40 ausgetauscht werden. Zudem können in der Steuereinrichtung 25 interne Grundparameter oder Sollwerte 251 der Steuereinrichtung 25 gespeichert sein, mit welchen das Schweißwerkzeug 21, insbesondere für seine Positionierung im Raum und daher an den Bauteilen 5, 6 gesteuert wird.

Fig. 2 zeigt den Aufbau der Elektroden 22, 23 des Schweißwerkzeugs 21 bei dem vorliegenden Ausführungsbeispiel genauer. Demzufolge ist die Elektrode 22 als Elektrodenschaft ausgebildet, der an seinem einen Ende mit einer Elektrodenkappe 220 versehen ist. Die Elektrodenkappe 220 ist an der Elektrode 22 an ihrem dem Bauteil 5 zugewandten Ende angeordnet. Außerdem ist die Elektrode 23 als Elektrodenschaft ausgebildet, der mit einer Elektrodenkappe 230 versehen ist. Die Elektrodenkappe 230 ist an der Elektrode 23 an ihrem dem Bauteil 6 zugewandten Ende angeordnet.

Das Schweißwerkzeug 21 kann mit einer sehr schematisch dargestellten Reinigungseinrichtung 60 derart bearbeitet werden, dass der verschmutzte Teil einer der Elektrodenkappen 220, 230 beseitigt wird. Die Elektrodenkappen 220, 230 sind demzufolge Verschleißobjekte. Die Reinigungseinrichtung 60 kann eine Austauscheinrichtung zum Austausch der Elektrodenkappen 220, 230 sein oder als Fräs- und/oder Schneideinrichtung ausgeführt sein, um den verschmutzten Teil einer der Elektrodenkappen 220, 230 bei Bedarf abzuschneiden oder abzufräsen.

Im Betrieb des Schweißwerkzeugs 21 werden die Elektroden 22, 33 an einer zu verschweißenden Stelle (Fügestelle) an das mindestens eine Bauteil 5, 6 angeordnet und mit Hilfe einer Halte- und/oder Anpresskraft Fs an das mindestens eine Bauteil 5, 6 angesetzt. Anders ausgedrückt, die beiden Elektroden 22, 23 spannen die Bauteile 5, 6 mit der Kraft Fs ein. Hierbei sind die Elektroden 22, 23 je nach Anzahl der bereits durchgeführten Fräs- und/oder Schneidvorgängen an den Elektrodenkappen 220, 230 unterschiedlich weit an das mindestens eine Bauteil 5, 6 zuzustellen, um die gewünschte Kraft Fs zu erzielen. Anschließend wird den Elektroden 22, 33 mit Hilfe eines Schweißtransformators 27 ein Schweißstrom Is für eine vorbestimmte Zeitdauer T und in einer vorbestimmten Charakteristik zugeführt. Hierfür wird der Strom Is mit definiertem Stromverlauf, insbesondere mindestens teilweise geregelt, zugeführt. Dadurch entsteht Wärme in dem mindestens einen Bauteil 5, 6, so dass sich eine Schweißlinse ausbildet, die später die Schweißverbindung 7 bildet. Dadurch wird das mindestens einen Bauteil 5, 6 durch ein Fügeverfahren verbunden. Das mindestens eine Bauteil 5, 6 wird gefügt.

Beim Schweißen können Störgrößen 8 auftreten, wie beispielsweise Schweißspritzer und/oder ein Spalt in einer der Fügeebenen zwischen den Bauteilen 5, 6 entstehen und/oder eine Schiefstellung der Bauteile 5, 6 entstehen und/oder sich unerwünschte Veränderungen einer vorbestimmten Vorhaltekraft der Kraft Fs und/oder des Schweißstromes Is über der Zeit t ergeben. Zudem kann der Schweißvorgang unerwünscht zu früh abgebrochen werden.

Die Steuervorrichtung 10 von Fig. 1 ist in der Lage, auch derartige Störgrößen 8 zu kompensieren, wie nachfolgend beschrieben.

Fig. 3 zeigt eine vereinfachte Darstellung des Schweißwerkzeugs 21 an der Vorrichtung 20. Das Schweißwerkzeug 21 ist als servoelektrische C-Schweißzange ausgestaltet. Hierfür hat das Schweißwerkzeug 21 einen beweglichen Arm 21A, einen feststehenden Arm 21B, eine Antriebseinrichtung 26, einen Schweißtransformator 27, und als Teil der Erfassungseinrichtung 30 von Fig. 1 einen Kraftsensor 30A und einen Positions- und/oder Wegsensor 30B. Die Anordnung der beiden Elektroden 22, 23 zueinander bildet ein Bezugssystem 50 für die Erfassung beispielsweise eines Abstands As(t0) zwischen den Elektroden 22, 23 für die Steuervorrichtung 10 von Fig. 1.

In Fig. 3 ist zwischen den Elektroden 22, 23 ein Bauteil 5 vorhanden, an dem eine Schweißverbindung 7 herzustellen ist, wie zuvor in Bezug auf Fig. 1 und Fig. 2 genauer beschrieben. Der Schweißtransformator 27 mit angebautem Gleichrichter ist zwischen der Antriebseinrichtung 26 und dem feststehenden Arm 21B angeordnet.

Die Antriebseinrichtung 26 von Fig. 3 treibt mit einem, insbesondere elektrischen, Motor den beweglichen Arm 21A an, um diesen translatorisch zu bewegen. Hierfür führt der Motor eine vorbestimmte Anzahl an Umdrehungen n oder -n aus und erzeugt dadurch ein Drehmoment M, das auf den Arm 21A wirkt. Infolgedessen wird der bewegliche Arm 21A auf den feststehenden Arm 21B bzw. das mindestens eine Bauteil 5 zugestellt oder von diesem wegbewegt/zurückgestellt. Der Positions- und/oder Wegsensor 30B erfasst den beim Zustellen oder Zurückstellen zurückgelegten Weg des beweglichen Arms 21A relativ zu einem Bezugspunkt B. Der Positions- und/oder Wegsensor 30B ist hierfür in oder an der Antriebseinrichtung 26 und/oder dem beweglichen Arm 21A angeordnet. Der Positions- und/oder Wegsensor 30B kann als Resolver/Absolutwertgeber oder als ein Inkrementalgeber eines Servomotors der Antriebseinrichtung 26 implementiert sein. Zusätzlich oder alternativ ist bei einem induktiven Antrieb der Luftspalt eines Elektromagneten zum indirekten Erfassen des zurückgelegten Wegs des beweglichen Arms 21A relativ zu einem Bezugspunkt B verwendbar. Alternativ oder zusätzlich erfasst der Positions- und/oder Wegsensor 30B die aktuelle Position einer vorbestimmten Stelle an dem beweglichen Arm 21A.

Fig. 3 zeigt den Zustand für eine Zeit t0, in welchem die beiden Arme 21A, 21B mit den Elektroden 22, 23 an dem Bauteil 5 angeordnet sind, jedoch noch keine Anpress- und Haltekraft $F_s$ auf das Bauteil 5 wirkt. Daher gilt $F_s$ bzw. $F_s(t0) = 0$. Der Positions- und/oder Wegsensor 30B gibt daher ein Wegsignal S(t0) aus, welches dem Abstand As(t0) in dem Bezugssystem 50 entspricht. Zum Herstellen der Schweißverbindung 7 von Fig. 2 treibt die Antriebseinrichtung 26 den beweglichen Arm 21A noch weiter in Richtung des Bauteils 5 und somit des feststehenden Arms 21B an.

Wie in Fig. 4 gezeigt, wirkt dadurch zu einer Zeit t1 eine vorbestimmte Anpress- und Haltekraft $F_s(t1)$ auf das Bauteil 5 und zwischen den Elektroden 22, 23. Zu der Zeit t1 sind die Elektroden 22, 23 somit beabstandet um den Abstand As(t1), der kleiner ist als der Abstand As(t0). Die Kraft $F_s(t1)$ führt zur Aufbiegung der Zangenarme 21A, 21B, wie aus dem Vergleich von Fig. 3 und Fig. 4 ersichtlich. Bei dem Beispiel von Fig. 4 ist durch die Aufbiegung der feststehende Zangenarm 21B aus seiner Position von Fig. 3 in die Position von Fig. 4 verschoben. Nach Beginn eines Schweißvorgangs ändert sich der Abstand zwischen den Elektroden 22, 23 dynamisch.

Somit gibt der Positions- und/oder Wegsensor 30B für den Weg, welchen der bewegliche Arm 21A zwischen dem Zustand von Fig. 3 in den Zustand von Fig. 4 zurücklegt, über der Zeit t ein veränderliches Wegsignal S(t) aus. Fig. 4 veranschaulicht den Unterschied des Wegsignals S(t1) zu der Zeit t1 im Vergleich zu dem Wegsignal S(t0) zu der Zeit t0. In dem Wegsignal S(t) ist die Aufbiegung der Zangenarme 21A, 21B inbegriffen. Dagegen ist in dem Bezugssystem "As" nur die elastische/plastische Verformung des zu schweißenden Materials der Bauteil(e) 5, 6 und/oder die elastische/plastische Verformung der Elektroden 22, 23 inbegriffen. Die Zeit t1 ist eine beliebig wählbare Zeit während eines Schweißvorgangs.

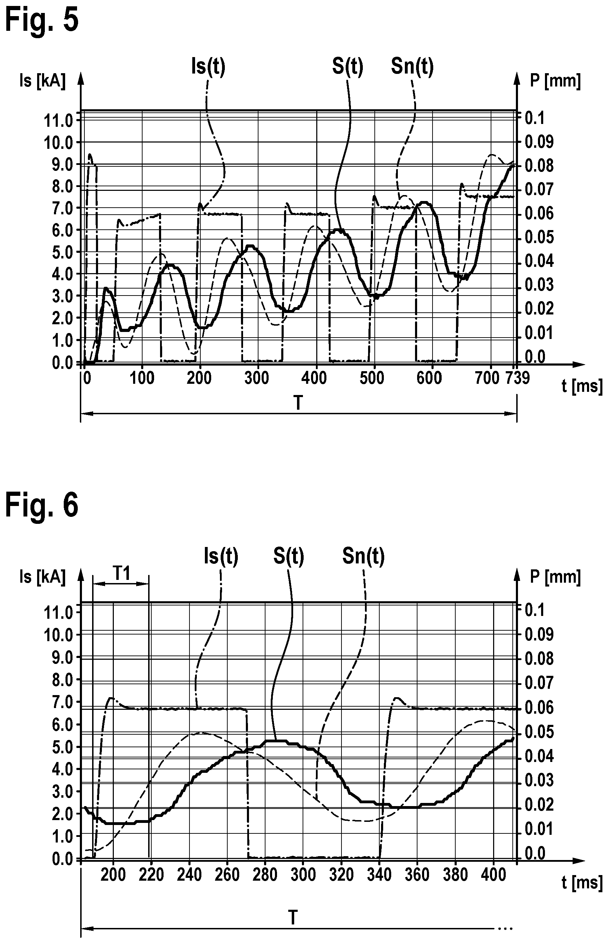

Noch dazu hat die mechanische Steifigkeit der Arme 21A, 21B bei dem anschließenden Schweißvorgang einen Einfluss auf das Schweißergebnis und damit die Qualität der herzustellenden Schweißverbindung 7 von Fig. 2. Dies ist anhand von Fig. 5 genauer beschrieben.

Fig. 5 zeigt über der Zeit t in ms einen Schweißstrom Is(t) mit einem intermittierenden Verlauf. Der Schweißstrom Is(t) wird den Elektroden 22, 23 zur Durchführung eines Schweißvorgangs für eine Zeitdauer zugeführt, die nachfolgend auch Schweißzeit T genannt ist. Die vertikale Achse links in Fig. 5 gibt die jeweiligen Werte oder Amplituden Is für den Schweißstrom Is(t) in kA an. Zudem ist in Fig. 5 das resultierende Wegsignal S(t) gezeigt, welches der Sensor 30B in Echtzeit über der Zeit t erfasst. Im Vergleich dazu ist ein normiertes Wegsignal Sn(t) gezeigt, welches die Steuervorrichtung 10 über der Zeit t als eine Führungsgröße für die Regelung des Schweißvorgangs erzeugt. Die vertikale Achse rechts in Fig. 5 gibt für die Signale S(t), Sn(t) die jeweiligen Positionen P der Elektrode 22 an dem beweglichen Arm 21A in mm an. Das Signal S(t) gibt das "Roh-Signal" wieder, also den erfassten oder aufgezeichneten Weg des Sensors 30B. Das normierte Signal Sn(t) gibt die Relativbewegung der Elektroden 22, 23 zueinander wieder.

Die Steuervorrichtung 10 kann das normierte Wegsignal Sn(t) zum Regeln des Schweißstroms Is(t) und/oder der Kraft $F_s(t)$ bei einem Schweißvorgang mit dem Schweißwerkzeug 21 verwenden. Damit wird der Einfluss der mechanischen Eigenschaften des Zangensystems des Schweißwerkzeugs 21 kompensiert.

Fig. 6 zeigt eine vergrößerte Darstellung für den Zeitraum bis zu 400 ms, um die Unterschiede zwischen den Signalen S(t), Sn(t) noch besser zu verdeutlichen. Das Wegsignal Sn(t), welches die Steuervorrichtung 10 über der Zeit t als eine Führungsgröße für die Regelung des Schweißvorgangs erzeugt, kompensiert die nachfolgend beschriebenen Einflüsse auf den zeitlichen Verlauf des in Echtzeit erfassten Wegsignals S(t). Mit dem Wegsignal Sn(t) wird eine Überprüfung und Regelung des Schweißvorgangs in der Anfangszeit T1 des Schweißvorgangs möglich.

Aus Fig. 5 und noch besser aus Fig. 6 ist der Einfluss der Zangensteifigkeit zu Beginn der Schweißzeit T ablesbar. Effekt und Ursache für diesen Einfluss ist, dass der Schweißstrom Is(t) anfänglich, insbesondere in der Zeitdauer T1, zu einer Erwärmung des Bauteils 5 und somit zu einer Expansion des zu fügenden Bauteil(s) führt. Dadurch erhöht sich die resultierende Elektrodenkraft bzw. die Kraft $F_s(t)$, was zu einer Unterdrückung einer Veränderung des Wegsignals S(t) führt. Deshalb ist keine Überprüfung und Regelung des Schweißvorgangs auf Grundlage des Wegsignals S(t) in der Anfangszeit des Schweißvorgangs möglich. Die Anfangszeit ist insbesondere gleich der Zeitdauer T1. Die Anfangszeit kann bis zu 30 ms betragen.

Zudem hat die Zangensteifigkeit während des Schweißens einen Einfluss, wie folgt. Im Verlauf des Schweißvorgangs führen sowohl die Expansion des mindestens einen Bauteils 5 wie auch das Einsinken der Elektroden 22, 23 in das mindestens eine Bauteil 5 bzw. die Fügepartner zu einer Veränderung der Kraft $F_s(t)$ und somit zur Aufbiegung und/oder Streckung des Zangensystems des Schweißwerkzeugs 21. Eine Veränderung der Kraft $F_s(t)$ führt stets zu einer Veränderung des Wegsignals S(t) im Vergleich zum Bezugssystem 50 (Abstand der Elektroden 22, 23 zueinander).

Wie in Fig. 5 und Fig. 6 dargestellt, unterliegt die eingestellte Kraft $F_s(t)$ zwischen den Elektroden 22, 23 während des Schweißens (Schweißvorgang) einer hohen bzw. großen Dynamik, die durch die Erwärmung und Expansion des zu verschweißenden Materials des mindestens einen Bauteils 5 hervorgerufen wird. Dabei gilt Folgendes.

Bei einem konstanten Schweißstrom Is(t) erfolgt während des Stromflusses am Anfang der Schweißzeit T, oder am Anfang eines Pulses eines intermittierenden Schweißstrom Is(t), eine Expansion des mindestens einen Bauteils 5 (Schweißgut). Dies hat ein Ansteigen oder eine Erhöhung des Wegsignals S(t) zur Folge. Während des Stromflusses am Ende der Schweißzeit T, oder am Ende eines Pulses eines intermittierenden Schweißstrom Is(t), folgt ein, insbesondere leichtes, Einsinken der Elektroden 22, 23 in das mindestens eine Bauteil 5 durch Erweichung des Materials. Dies hat einen Abfall oder eine Verringerung des Wegsignals S(t) zur Folge.

Bei dem intermittierenden Schweißstrom Is(t) von Fig. 5 und Fig. 6 entstehen Pausenzeiten für den Stromfluss, in welchen gilt Is(t) = 0. Während der Pausenzeiten findet eine Schrumpfung des mindestens einen Bauteils 5 (Schweißgut) statt. Dies hat einen Abfall oder eine Verringerung des in Echtzeit erfassten Wegsignals S(t) zur Folge.

Aufgrund der Zangeneigenschaften und Kraftschwankungen hat das Wegsignal S(t) eine Diskrepanz zum Bezugssystem 50. Die Weganstiege im Wegsignal S(t) finden hierbei versetzt in der Pausenzeit (Is(t) = 0) statt und bilden sich nicht mit der gleichen Amplitude über den gesamten Zeitraum der Schweißzeit T ab.

Dagegen hat gemäß Fig. 5 und Fig. 6 das von der Steuervorrichtung 10 erzeugte Wegsignal Sn(t) eine verbesserte Dynamik im Vergleich zu dem in Echtzeit erfassten Wegsignal S(t). Das von der Steuervorrichtung 10 erzeugte Wegsignal Sn(t) liefert bereits 20 ms nach Beginn der Schweißzeit T Werte, mit welchen die Steuervorrichtung 10 den Schweißvorgang regeln kann. Dadurch ist der Schweißvorgang mit dem Signal Sn(t) früher regelbar als mit dem in Echtzeit erfassten Wegsignal S(t). Noch dazu bietet das von der Steuervorrichtung 10 erzeugte Wegsignal Sn(t) während der Pausenzeiten, in den Is(t) = 0 gilt, eine direkte Rückmeldung (Feedback).

Das von der Steuervorrichtung 10 erzeugte Wegsignal Sn(t) kompensiert die Aufbiegung des Schweißwerkzeugs 21 im Wegsignal S(t). Das Wegsignal Sn(t) bildet die relative Bewegung der Elektroden 22, 23 zueinander ab.

Daher weicht das von der Steuervorrichtung 10 erzeugte Wegsignal Sn(t) viel geringer als das in Echtzeit erfasste Wegsignal S(t) von einem nicht dargestellten Wegsignal ab, das mit einem Triangulationssensor zwischen den Elektroden 22, 23 erfassbar ist. Daher kann das von der Steuervorrichtung 10 erzeugte Wegsignal Sn(t) auch normiertes Wegsignal Sn(t) genannt werden. Verwendet die Steuervorrichtung 10 das normierte Wegsignal Sn(t) bei der Regelung des Schweißvorgangs, können auch für unterschiedliche Zangentypen, wie beispielsweise C-Zange oder X-Zange oder Zangen mit unterschiedlichen Geometrien, jeweils (annähernd) derselbe Punktdurchmesser für eine Schweißverbindung 7 erzielt werden. Das ist nur möglich, wenn die Kompensation der mechanischen Zangeneigenschaften Z erfolgreich durchgeführt wurde.

Durch die von der Steuervorrichtung 10 ausgeführte Kompensation können charakteristische Positionspunkte des Wegsignals Sn(t), wie beispielsweise Anstieg des Wegsignal Sn(t) (Weganstieg) oder Maxima des Wegsignals Sn(t) (Wegmaxima), früher detektiert werden. Darüber hinaus können kritische Wegmaxima, bei den beispielsweise eine Gefahr von Schweißspritzern besteht, wie die insbesondere beim Schweißen von Stahl der Fall ist, früher und in Echtzeit detektiert und bei Bedarf kompensiert werden.

Der Schweißprozess/Schweißvorgang ist erst mithilfe des kompensierten/normierten Wegsignals Sn(t) regelbar, da die Armaufbiegung des Werkzeugs 21 ein Vielfaches, insbesondere 20-faches, des Prozesssignals, insbesondere des Kraftsignals Fs(t), ist. Das normierte Wegsignal Sn(t) kompensiert eine Aufbiegung im Positionssignal bzw. Wegsignal S(t), die durch ungewollte Kraftschwankungen (Störgrößen, Spalt, Schiefstellung, Regeleingriffe, Erweichung des Signals etc.) oder Kraftprofile entsteht.

Ebenfalls kann die Wahrscheinlichkeit für die Lage eines Spaltes in der Fügeebene (artfremden Mehrblechverbindung) angegeben werden, da sich die elastische/plastische Verformung des Bauteils 5, 6 in der Gesamtsteifigkeit widerspiegelt.

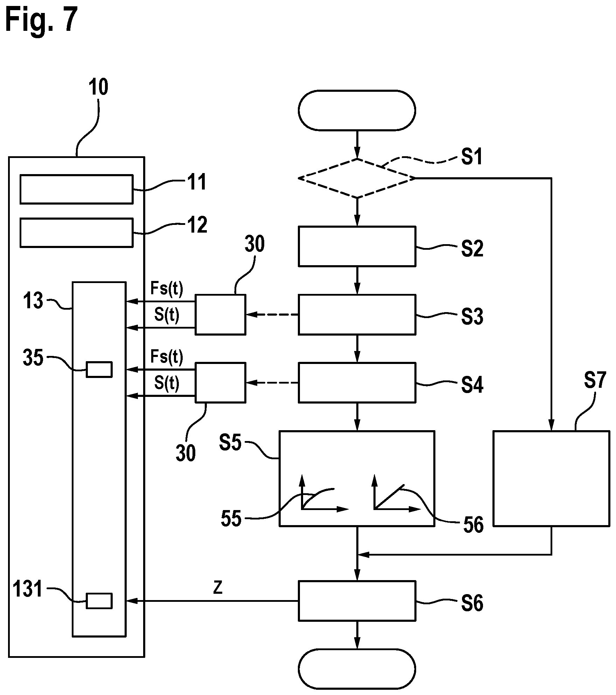

Hierfür geht die Steuervorrichtung 10 zur Ermittlung des Wegsignal Sn(t) aus dem in Echtzeit erfassten Wegsignal S(t) vor, wie in Fig. 7 bis Fig. 10 veranschaulicht.

Das Verfahren von Fig. 7 führt die Steuervorrichtung 10, insbesondere mit ihrem Bestimmungsmodul 11 und Kraftregelmodul 12, zum Bestimmen der mechanischen Zangeneigenschaften Z des Schweißwerkzeugs 21 aus. Das Verfahren wird zumindest einmal vor einem Schweißen mit dem Schweißwerkzeug 21 in der Produktion ausgeführt. Das Verfahren kann die Steuervorrichtung 10 bei der Inbetriebnahme des Schweißwerkzeugs 21 ausführen.

Optional kann die Steuervorrichtung 10, insbesondere mit ihrem Bestimmungsmodul 11 und Kraftregelmodul 12, das Verfahren von Fig. 7 jedoch zusätzlich mit vorbestimmten Intervallen ausführen. Dies ist insbesondere vorteilhaft, um den Verschleiß des Schweißwerkzeugs 21 über seine Nutzungsdauer zu bestimmen, bei welcher beispielsweise die Elektrodenkappen 220, 230 (Fig. 2) verschmutzen und dadurch mit der Reinigungseinrichtung 60 (Fig. 2) gereinigt bzw. abgefräst werden müssen. Derartige Intervalle können festgelegt sein für die Durchführung einer Kurzschlussmessung, bei welcher die Elektroden ohne Bauteil 5, 6 dazwischen aneinander anliegen, oder für einen Fertigungsprozess zum Fertigen eines Gegenstands, an dem mehrere Schweißverbindungen 7 herzustellen sind, oder per zuvor ausgeführte analytische *oder* numerische Simulation der Zangenkonfiguration, bei der die Steifigkeits- und Dämpfungskoeffizienten des mechanischen Systems ermittelt werden, wie zuvor in Bezug auf Schritt S21 beschrieben. Bei einem in-situ Bestimmungsverfahren kann die Version "numerische oder analytische Simulation" weggelassen werden. Die Intervalle können durch einen Ablauf einer vorbestimmten Zeitdauer festgelegt sein. Alternativ oder zusätzlich sind die Intervalle durch eine vorbestimmte Anzahl von bereits durchgeführten Schweißvorgängen oder Schweißverbindungen 7 festlegbar.

Die Grundlage des Systems von Fig. 3 und Fig. 4 und somit des Verfahrens von Fig. 7 bildet die vereinfachte Abbildung bzw. Annahme der Schweißzange als Einmassenschwinger. Mithilfe der verbauten Weg- und Kraftsensorik der Erfassungseinrichtung 30 werden in gewissen Zeitzyklen die Kennwerte der Zangensteifigkeit des Werkzeugs 21 ermittelt. Zur Abbildung des Bezugssystems 50 "Abstand zwischen den Elektroden" wird das aufgezeichnete Erfassungssignal während des Schweißvorgangs um die erwartete Aufbiegung/Streckung des Systems verrechnet. Hierdurch wird es ermöglicht, mit einem in der Industrie verwendeten Messaufbau, die relative Positionsänderung zwischen den Elektroden 22, 23 abzubilden. Dies ist nachfolgend genauer beschrieben

Nach dem Start des Verfahrens von Fig. 7 wählt die Steuervorrichtung bei einem Schritt S1 eine Bestimmungsart zur Bestimmung der mechanischen Zangeneigenschaften Z des Schweißwerkzeugs 21 aus. Die Steuervorrichtung 10 kann die Auswahl abhängig von der Art des Schweißwerkzeugs 21, insbesondere C-Zange oder X-Zange, und/oder abhängig von bereits gespeicherten Grundparametern 131 und/oder unter Verwendung von mindestens einer Eingabe eines Benutzers an der Bedieneinrichtung 40 vornehmen. Hierbei ist zwischen experimentellen Bestimmungsarten zur Bestimmung der mechanischen Zangeneigenschaften Z des Schweißwerkzeugs 21 oder rechnerischen Bestimmungsarten zur Bestimmung der mechanischen Zangeneigenschaften Z des Schweißwerkzeugs 21 auswählbar.

Experimentelle Bestimmungsarten sind zum Beispiel eine Durchführung eines Skalierens der Kraft Fs(t), ohne dass ein Bauteil 5, 6 zwischen des Elektroden 22, 23 vorhanden ist, eine Durchführung einer Kurzschlussschweißung, bei der beim Schweißen kein Bauteil 5, 6 zwischen des Elektroden 22, 23 vorhanden ist, eine Inline-Bestimmung, welche eine Durchführung eines Schweißvorgangs umfasst, bei dem beim Schweißen mindestens ein Bauteil 5, 6 zwischen des Elektroden 22, 23 vorhanden ist.

Rechnerische Bestimmungsarten zur Bestimmung der mechanischen Zangeneigenschaften Z des Schweißwerkzeugs 21 sind zum Beispiel eine Durchführung einer numerischen Simulation oder eine Durchführung einer analytischen Berechnung der Zangengeometrie des Schweißwerkzeugs 21. Die Zangengeometrie umfasst insbesondere die Abmessungen, beispielsweise Länge und Dicke, der Zangenarme 21A, 21B, die Ausgestaltung der Zangenarme 21A, 21B, die Abmessung und Ausgestaltung der Elektroden 22, 23, usw. Der Schritt S1 ist optional. Der Schritt S1 kann entfallen, wenn in der Steuervorrichtung 10 nur eine Bestimmungsart zur Bestimmung der mechanischen Zangeneigenschaften Z des Schweißwerkzeugs 21 implementiert ist.

Wurde bei dem Schritt S1 eine experimentelle Bestimmungsart ausgewählt, geht der Fluss zu einem Schritt S2 weiter. Wurde dagegen eine rechnerische Bestimmungsart ausgewählt, geht der Fluss zu einem Schritt S7 weiter.

Bei dem Schritt S2 steuert die Steuervorrichtung 10 die Antriebseinrichtung 26 an, die Elektroden 22, 23 zusammenzufahren.

Hierfür wird beispielsweise die bewegliche Elektrode 22 auf die feststehende Elektrode 23 zugestellt. Nach dem Start der Steuerung geht der Fluss zu einem Schritt S3 weiter.

Bei dem Schritt S3 wird, insbesondere mit der Steuervorrichtung 10, beispielsweise mit dem Kraftregelmodul 12, eine Erfassung mit der Erfassungseinrichtung 30 gestartet, um das Kraftsignal Fs(t) und das Wegsignal S(t) in Echtzeit zu erfassen. Die Erfassungseinrichtung 30 sendet die erfassten Signale Fs(t), S(t) an das Speichermodul 13 zur Speicherung der Signale als Teil der Daten 35. Zudem prüft die Steuervorrichtung 10, insbesondere mit dem Kraftregelmodul 12, ob das erfasste Kraftsignale Fs(t) noch kleiner 0 N ist oder nicht. Ist das erfasste Kraftsignale Fs(t) größer 0 N geht der Fluss zu einem Schritt S4 weiter.

Bei dem Schritt S4 regelt die Steuervorrichtung 10, beispielsweise mit dem Kraftregelmodul 12, den Kraftwert des erfassten Kraftsignals Fs(t) auf einen vorbestimmten Kraftwert. Ist kein Bauteil 5, 6 zwischen den Elektroden 22, 23 vorhanden, üben die Elektroden 22, 23 unmittelbar die erfasste Kraft Fs(t) aufeinander aus. Ist ein Bauteil 5, 6 zwischen den Elektroden 22, 23 vorhanden, üben die Elektroden 22, 23 über das Bauteil 5, 6 die erfasste Kraft Fs(t) aufeinander aus. Danach geht der Fluss zu einem Schritt S5 weiter.

Bei dem Schritt S5 verwendet die Steuervorrichtung 10, insbesondere ihr Bestimmungsmodul 11, die ermittelten Zangenparameter, um eine Beziehung (Regression) zwischen den Signalen Fs(t), S(t) zu bestimmen. Hierbei wird zunächst bestimmt, ob die Beziehung zwischen dem Kraftsignal Fs(t) und dem Wegsignal S(t) eine Beziehung m-ter-Ordnung ist, wie in Fig. 7 mit dem Verlauf 55 gezeigt, oder ob die Beziehung zwischen dem Kraftsignal Fs(t) und dem Wegsignal S(t) eine lineare Beziehung ist, wie in Fig. 7 mit dem Verlauf 56 gezeigt. Bei den Verläufen 55, 56 von Fig. 7 ist das Kraftsignal Fs(t) jeweils an der vertikalen Achse aufgetragen und das Wegsignal S(t) an der horizontalen Achse aufgetragen. Für eine Beziehung m-ter-Ordnung bzw. einen Verlauf 55 verwendet die Steuervorrichtung 10, insbesondere ihr Bestimmungsmodul 11, die folgende Gleichung (1)

$$x_m = c_1F + c_2F^2 + \ldots + c_mF^m + n \qquad \ldots (1)$$

um mit der aus dem Wegsignal S(t) ermittelten Positionsveränderung x der Zangenarm(e) 21A, 21B und/oder der Elektrode(n) 22, 23 und der aus dem Kraftsignal Fs(t) ermittelten Kraft F aufgrund der Steifigkeit des Schweißwerkzeugs 21 die Zangensteifigkeitsfaktoren $c_1$ bis $c_m$ von Gleichung (1) zu bestimmen. Hierbei ist m eine natürliche Zahl größer oder gleich 1. F steht für die aktuelle bzw. momentane Kraft. Der Parameter n ist eine optionale Konstante, welche den Versatz (Offset) der Gleichung (1) wiedergibt. Der Versatz (Offset) wird durch den Schnittpunkt des Stroms Is(t) oder der Wegsignale S(t), Sn(t) mit der vertikalen Achse (Ordinate) in Fig. 6 oder Fig. 7 bestimmt. Prinzipiell ist n nicht nötig. Die maximale Ordnung der Gleichung (1) ist durch einen Benutzer der Vorrichtung 2 oder Anlage 1 festlegbar. Infolge des Bestimmtheitsmaßes $R^2$ für die Regression berechnet die Vorrichtung 10 die geeignetste Ordnung der Beziehung gemäß Gleichung (1) (Regressionsgleichung).

Für eine lineare Beziehung bzw. einen Verlauf 56, bei welchem m = 1 ist, verwendet die Steuervorrichtung 10, insbesondere ihr Bestimmungsmodul 11, die folgende Gleichung (2), um den Zangensteifigkeitsfaktor c zu bestimmen:

$$x_1 = cF + n \qquad \ldots (2)$$

Optional bestimmt die Steuervorrichtung 10, insbesondere ihr Bestimmungsmodul 11, zusätzlich noch die Zangendämpfungsfaktoren für die Zangeneigenschaften Z unter Verwendung der folgenden Gleichung (3):

$$\left(\ddot{x} + \frac{k}{m}\dot{x} + \frac{c}{m}x = 0\right)$$

$$\dots (3)$$

In der Gleichung (3) steht k für einen Dämpfungsfaktor, der mit der ersten Ableitung der Positionsänderung x multipliziert wird. Die zweite Ableitung der Positionsänderung x geht unverändert in die Gleichung (3) ein. Ansonsten gelten dieselben Parameter/Variablen, wie in Bezug auf Gleichung (1) und (2) bereits genannt.

Nach Bestimmung der Zangeneigenschaften Z bei dem Schritt S5 geht der Fluss zu einem Schritt S6 weiter.

Bei dem Schritt S6 speichert die Steuervorrichtung 10, insbesondere ihr Speichermodul 13, die bei dem Schritt S5 ermittelten Zangeneigenschaften Z als Grundparameter 131 in dem Speichermodul 13.

Danach ist das Verfahren von Fig. 7 beendet.

Wurde bei dem Schritt S1 eine rechnerische Bestimmungsart ausgewählt, werden die Zangeneigenschaften Z bei dem Schritt S7 bestimmt. Hierfür verwendet die Steuervorrichtung 10, insbesondere ihr Bestimmungsmodul 11, die zuvor genannte Gleichung (1), um die Zangensteifigkeitsfaktoren $c_1$ bis $c_m$ zu bestimmen. Optional verwendet die Steuervorrichtung 10, insbesondere ihr Bestimmungsmodul 11, zusätzlich die zuvor genannte Gleichung (3), um auch die Zangendämpfungsfaktoren zu bestimmen.

Nach Bestimmung der Zangeneigenschaften Z bei dem Schritt S7 geht der Fluss zu einem Schritt S6 weiter, bei welchem die bei dem Schritt S7 ermittelten Zangeneigenschaften Z als Grundparameter 131 in dem Speichermodul 13 gespeichert werden.

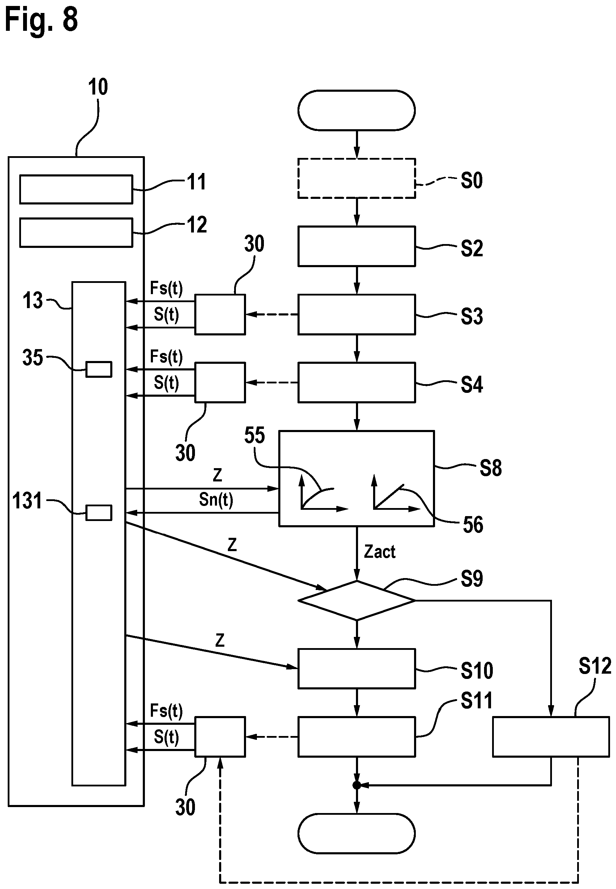

Danach kann ein Schweißvorgang mit dem Schweißwerkzeug 21 beginnen. Dabei geht die Steuervorrichtung 10 vor, wie in Fig. 8 veranschaulicht.

Gemäß Fig. 8 wird nach dem Start des Verfahrens ein optionaler Schritt S0 durchgeführt. Bei dem Schritt S0 wird ein Prozessablauf in einer Fertigung eines Gegenstands gestartet und/oder zumindest teilweise durchgeführt. Ein derartiger Prozessablauf könnte sein, dass eine Rohkarosse mit Hilfe einer Transporteinrichtung einer Vorrichtung 20 zugeführt wird und/oder die Vorrichtung 20 und/oder das Schweißwerkezug 21 zu der Rohkarosse bewegt wird. Danach geht der Fluss zu dem Schritt S2 weiter.

Bei dem Schritt S2, dem darauffolgenden Schritt S3 und dem darauffolgenden Schritt S4 wird vorgegangen, wie in Bezug auf Fig. 7 beschrieben. Demzufolge wird das Schweißwerkzeug 21 an mindestens einem Bauteil 5, 6 angeordnet und mit einer Kraft Fs > 0 N beaufschlagt, so dass die vorbestimmte Kraft Fs erreicht ist, mit welcher ein Schweißvorgang zu starten ist. Danach geht der Fluss zu einem Schritt S8 weiter.

Bei dem Schritt S8 wird eine Berechnung in der Vorhaltezeit des Schweißvorgangs ausgeführt. Demzufolge wird den Elektroden 22, 23 noch kein Schweißstrom Is zugeführt, sondern die Steuervorrichtung 10, insbesondere ihr Bestimmungsmodul 11, führt eine Berechnung aus, um die derzeitigen Zangeneigenschaften Zact zu berechnen. Hierfür verwendet die Steuervorrichtung 10, insbesondere ihr Bestimmungsmodul 11 und/oder Kraftmodul 12, die in dem Speichermodul 13 gespeicherten Zangeneigenschaften Z und/oder führt eine Regression zwischen dem Kraftsignal Fs(t) und dem Wegsignal S(t) durch, die bei den Schritten S3 und S4 von Fig. 8 ermittelt wurden. Hierbei bestimmt die Steuervorrichtung 10, insbesondere ihr Bestimmungsmodul 11, unter Verwendung der Zangeneigenschaften Z sowie dem Kraftsignal Fs(t) und dem Wegsignal S(t) die jeweiligen Positionen x, und bildet daraus das Wegsignal Sn(t). Ein erstes Beispiel für dieses Wegsignal Sn(t) ist in Fig. 5 und Fig. 6 gezeigt, wie zuvor beschrieben. Danach geht der Fluss zu einem Schritt S9 weiter.

Bei dem Schritt S9 prüft die Steuervorrichtung 10, insbesondere ihr Bestimmungsmodul 11, ob die derzeitigen Zangeneigenschaften Zact von den in dem Speichermodul 13 gespeicherten Zangeneigenschaften Z abweichen. Die Steuervorrichtung 10 vergleicht somit die derzeitigen Zangeneigenschaften Zact mit den in dem Speichermodul 13 gespeicherten Zangeneigenschaften Z. Unterscheiden sind die Zangeneigenschaften Z von den derzeitigen Zangeneigenschaften Zact, geht der Fluss zu einem Schritt S10 weiter. Andernfalls, also wenn mindestens ein Unterschied zwischen den Zangeneigenschaften Z und den derzeitigen Zangeneigenschaften Zact vorhanden ist, der in einem vorbestimmten Toleranzbereich liegt, geht der Fluss zu einem Schritt S12 weiter.

Bei dem Schritt S10 führt die Steuervorrichtung 10, insbesondere ihr Bestimmungsmodul 11, eine Störgrößenbetrachtung aus. Die Steuervorrichtung 10 ermittelt, ob die derzeitigen Zangeneigenschaften Zact ungleich den in dem Speichermodul 13 gespeicherten Zangeneigenschaften Z +/- eine vorbestimmte Toleranz ist. Die Steuervorrichtung 10 ermittelt somit, ob die Differenz aus derzeitigen Zangeneigenschaften Zact und den in dem Speichermodul 13 gespeicherten Zangeneigenschaften Z in einem vorbestimmten Toleranzband liegt oder nicht. Liegt die Differenz nicht in dem vorbestimmten Toleranzband, gibt die Steuervorrichtung 10 mit Hilfe der Bedieneinrichtung 40 (Fig. 1) eine Meldung 48, insbesondere Warnmeldung, aus und geht zu einem Schritt S11 weiter. Andernfalls, also wenn die Differenz nicht in dem vorbestimmten Toleranzband liegt, geht der Fluss ohne Meldung 48, insbesondere Warnmeldung, zu dem Schritt S11 weiter.

Bei dem Schritt S11 führt die Steuervorrichtung 10, insbesondere ihr Strom- und/oder Kraftregelmodul 12, einen Schweißvorgang mit der Schweißzeit T unter Verwendung des Kraftsignals Fs(t) und des in Echtzeit erfassten Wegsignals S(t) als Führungsgröße für die Strom- und/oder Kraftregelung aus. Demzufolge wird den Elektroden 22, 23 ein Schweißstrom Is(t) zugeführt, wie beispielsweise in Fig. 5 und Fig. 6 gezeigt und zuvor beschrieben. Die Steuervorrichtung 10 führt also keine Kompensation der aktuellen Zangeneigenschaften Zact aus. Die bei dem Schweißvorgang, insbesondere in Echtzeit, erfassten Signale Fs(t) und S(t) werden in dem Speichermodul 13 gespeichert.

Danach ist das Verfahren von Fig. 8 beendet. Alternativ kann der Fluss wieder zu dem Schritt S0 zurückgehen.

Bei dem Schritt S12 führt die Steuervorrichtung 10, insbesondere ihr Strom- und/oder Kraftregelmodul 12, einen Schweißvorgang mit der Schweißzeit T unter Verwendung des Kraftsignals Fs(t) und des bei dem Schritt S8 erzeugten Wegsignals Sn(t) als Führungsgröße für die Strom- und/oder Kraftregelung aus. Demzufolge wird den Elektroden 22, 23 ein Schweißstrom Is(t) zugeführt, wie beispielsweise in Fig. 5 und Fig. 6 gezeigt und zuvor beschrieben. Die Steuervorrichtung 10 führt also eine Positionskompensation und damit Kompensation der aktuellen Zangeneigenschaften Zact aus, indem die Steuervorrichtung 10 als Führungsgröße für die Strom- und/oder Kraftregelung nicht das in Echtzeit erfasste Wegsignal S(t) verwendet, sondern das bei dem Schritt S8 erzeugte Wegsignal Sn(t) verwendet. Die bei dem Schweißvorgang, insbesondere in Echtzeit, erfassten Signale Fs(t) und S(t) werden in dem Speichermodul 13 gespeichert.

Somit ermöglicht die Steuervorrichtung 10 eine Detektion und Ausregelung von Störgrößen 8 (Fig. 2) bei dem mindestens einen Bauteil 5, 6 bzw. den Fügepartnern, die insbesondere aus Blech gefertigt sind. Hierzu wird in der Steuervorrichtung 10, insbesondere deren Speichermodul 13, hinterlegt, welche Materialgüte und Stärke die zu verschweißenden Bauteil(e) 5, 6 haben. Durch die unterschiedlichen mechanischen Dehnungs-Spannungs-Diagramme und somit derzeit oder aktuell vorhandenen Zangeneigenschaften Zact, kann die Kompensation des Spaltes und somit das Bauteil 5, 6, insbesondere Blech, in der Fügeebene ermittelt werden. Dies ist sehr vorteilhaft, da bei Verbindungen mehrerer Lagen eines Bauteils 5 oder mehrerer Bauteile 5, 6 bzw. Fügepartnern, die unterschiedliche Materialgüte und/oder Stärke aufweisen, nicht detektiert werden kann, in welchen Fügeebenen etwaige Störgrößen vorliegen. Hierbei überlagern sich die mechanischen Einflussgrößen der Zangenkonfiguration mit den Störgrößen 8 (Fig. 2) an der Fügestelle. Exemplarisch wäre es nicht mit der vorhandenen Sensorik (Erfassungseinrichtung 30) möglich, dass ein Spalt in einer Verbindung mehrerer Bauteile 5, 6, insbesondere Mehrblechverbindung, einer Fügeebene zugewiesen werden kann.

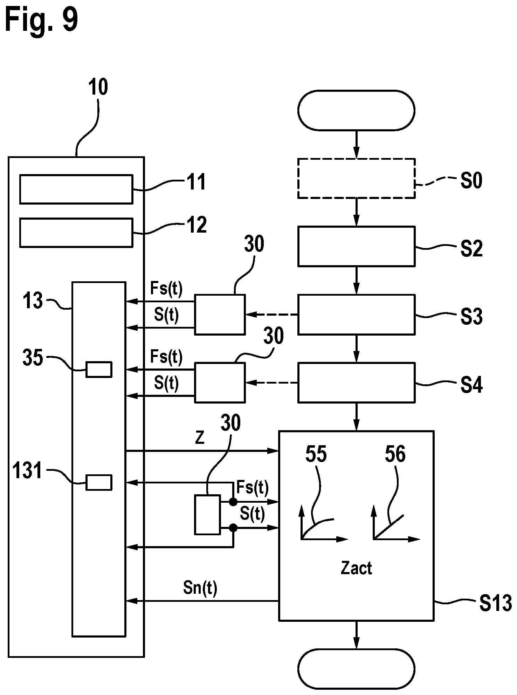

Anstelle der Schritte S8, S9 und S12 in der Vorhaltezeit eines Schweißvorgangs gemäß Fig. 8 oder alternativ zu dem Schritt S12 von Fig. 8 kann zumindest ein Schritt S13 eines Verfahrens von Fig. 9 ausgeführt werden.

Das Verfahren von Fig. 9 führt eine in-situ Kompensation der mechanischen Zangeneigenschaften Z während einer Schweißzeit T eines Schweißvorgangs aus.

Gemäß Fig. 9 werden nach dem Start des Verfahrens wieder der optionale Schritt S0 und die Schritte S2 bis S4 durchgeführt, wie in Bezug auf Fig. 7 beschrieben. Demzufolge wird das Schweißwerkzeug 21 an mindestens einem Bauteil 5, 6 angeordnet und mit einer Kraft Fs > 0 N beaufschlagt, so dass die vorbestimmte Kraft Fs erreicht ist, mit welcher ein Schweißvorgang zu starten ist. Danach geht der Fluss zu einem Schritt S13 weiter.

Bei dem Schritt S13 wird eine Echtzeitberechnung während der Schweißzeit T ausgeführt. Demzufolge wird den Elektroden 22, 23 ein Schweißstrom Is zugeführt, wie beispielsweise in Fig. 5 und Fig. 6 gezeigt. Außerdem führt die Steuervorrichtung 10, insbesondere ihr Bestimmungsmodul 11, gleichzeitig bzw. in Echtzeit eine Berechnung aus, um die derzeitigen Zangeneigenschaften Zact zu berechnen und zu kompensieren. Hierfür verwendet die Steuervorrichtung 10, insbesondere ihr Bestimmungsmodul 11 und/oder Kraftmodul 12, die in dem Speichermodul 13 gespeicherten Zangeneigenschaften Z sowie das Echtzeit-Kraftsignal Fs(t) des Schweißwerkzeugs 21 und das Echtzeit-Wegsignal S(t) des Schweißwerkzeugs 21 und berechnet unter Verwendung von Gleichung (1) und/oder von Gleichung (3) den Einfluss der derzeitigen Zangeneigenschaften Zact auf das Wegsignal S(t). Alternativ zur Verwendung von Echtzeit-Signalen sind mindestens zueinander synchrone Signale Fs(t), S(t) erforderlich. Die Erfassungseinrichtung 30 erfasst das Echtzeit-Kraftsignal Fs(t) und das Echtzeit-Wegsignal S(t) beim laufenden Schweißvorgang in Echtzeit und gibt dieses an die Steuervorrichtung 10 aus. Nach Berechnung der derzeitigen Zangeneigenschaften Zact berechnet die Steuervorrichtung 10, insbesondere ihr Bestimmungsmodul 11 und/oder Kraftmodul 12, die Differenz aus dem berechneten Einfluss auf das Wegsignal S(t) und dem Echtzeit-Wegsignal S(t). Als Ergebnis erhält die Steuervorrichtung 10, insbesondere ihr Bestimmungsmodul 11 und/oder Kraftmodul 12, das kompensierte Wegsignal Sn(t), das beispielsweise in Fig. 5 und Fig. 6 gezeigt ist. Die Steuervorrichtung 10 verwendet das normierte Wegsignal Sn(t) für die Regelung des Schweißvorgangs. Die Steuervorrichtung 10 führt die Berechnungen und Regelung von Schritt S13 so lange aus, bis die Schweißzeit T beendet ist.

Nach Ablauf der Schweißzeit T ist das Verfahren von Fig. 9 beendet. Alternativ kann der Fluss wieder zu dem Schritt S0 zurückgehen.

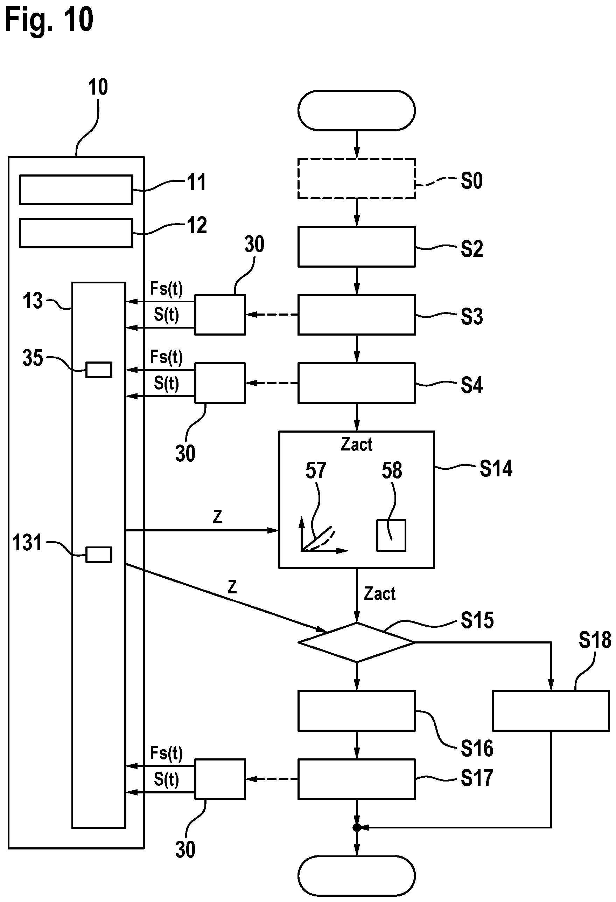

Optional kann zusätzlich zu mindestens einem der Verfahren von Fig. 8 oder Fig. 9, insbesondere deren Schritte S8 bis S13 ein Verfahren gemäß Fig. 10 durchgeführt werden.

Das Verfahren von Fig. 10 dient zur Kompensation der mechanischen Zangeneigenschaften Z des Schweißwerkzeugs 21 aufgrund von Informationen über Störgrößen 8 bei einem Schweißvorgang.

Das Verfahren von Fig. 10 führt eine in-situ Kompensation der mechanischen Zangeneigenschaften Z aufgrund von zusätzlichen Informationen zu dem bevorstehenden Schweißvorgangs aus.

Gemäß Fig. 10 werden nach dem Start des Verfahrens wieder der optionale Schritt S0 und die Schritte S2 bis S4 durchgeführt, wie in Bezug auf Fig. 7 beschrieben. Demzufolge wird das Schweißwerkzeug 21 an mindestens einem Bauteil 5, 6 angeordnet und mit einer Kraft Fs > 0 N beaufschlagt, so dass die vorbestimmte Kraft Fs erreicht ist, mit welcher ein Schweißvorgang zu starten ist. Danach geht der Fluss zu einem Schritt S14 weiter.

Bei dem Schritt S14 führt die Steuervorrichtung 10, insbesondere ihr Bestimmungsmodul 11, vor dem Schweißen, also ohne, dass ein Schweißstrom Is zugeführt wird, eine Berechnung der derzeitigen Zangeneigenschaften Zact aus, wie zuvor in Bezug auf Schritt S8 von Fig. 8 beschrieben. Damit sind die berechneten derzeitigen oder momentanen Zangeneigenschaften Zact während des Kraftaufbaus bei den Schritten S3 und S4 sowie die ermittelten Kennwerte des Schweißwerkzeugs 21 bekannt. Zudem erzeugt die Steuervorrichtung 10, insbesondere ihr Bestimmungsmodul 11, ein Steifigkeitsmodell 58 der Fügestelle. Hierfür bildet die Steuervorrichtung 10 eine Differenz der gespeicherten Zangeneigenschaften Z und der derzeitigen Zangeneigenschaften Zact. Daraus werden Informationen 57 zu Störgrößen 8 und zum Zangenverschleiß, insbesondere zur Abnutzung der Elektrodenkappen 220, 230 abgeleitet. Danach geht der Fluss zu einem Schritt S15, um die Differenz der gespeicherten Zangeneigenschaften Z und der derzeitigen Zangeneigenschaften Zact auszuwerten.

Bei dem Schritt S15 wird geprüft, ob die Differenz der gespeicherten Zangeneigenschaften Z und der derzeitigen Zangeneigenschaften Zact einen Wert hat, für welchen die Störgröße(n) 8 behebbar ist/sind oder nicht. Ist/sind die Störgröße(n) 8 behebbar, geht der Fluss zu einem Schritt S16 weiter. Andernfalls, also wenn die Störgröße(n) 8 nicht behebbar ist/sind, geht der Fluss zu einem Schritt S18 weiter.

Bei dem Schritt S16 führt die Steuervorrichtung 10, insbesondere ihr Bestimmungsmodul 11, eine Kompensation der Störgröße 8 aus. Hierfür führt die Steuervorrichtung beispielsweise eine Veränderung der Vorhaltekraft/Schweißzeit (Spalt) und/oder eine Veränderung des Schweißstromes/Zeit aus. Dabei können sowohl die Amplitude der Vorhaltekraft Fs und/oder die Schweißzeit T und/oder die Amplitude des Schweißstroms Is zu gewünschten Zeiten geändert werden. Danach geht der Fluss zu einem Schritt S17 weiter.

Bei dem Schritt S17 führt die Steuervorrichtung 10, insbesondere ihr Kraftregelmodul 12, einen Schweißvorgang mit dem veränderten Schweißstrom Is(t) und/oder der veränderten Kraft Fs(t) und/oder der veränderten Schweißzeit T aus. Die dabei in Echtzeit erfassten Signale Fs(t) und S(t) werden in dem Speichermodul 13 gespeichert. Die Steuervorrichtung 10 führt die Regelung von Schritt S17 so lange aus, bis die Schweißzeit T beendet ist.

Nach Ablauf der Schweißzeit T ist das Verfahren von Fig. 10 beendet. Alternativ kann der Fluss wieder zu dem Schritt S0 oder dem Schritt S2 zurückgehen.

Ist/sind die Störgröße(n) 8 nicht behebbar, wird bei dem Schritt S18 der Schweißvorgang abgebrochen bzw. kein Schweißstrom Is zugeführt. Die Steuervorrichtung 10 gibt mit Hilfe der Bedieneinrichtung 40 (Fig. 1) eine Meldung 48, insbesondere eine Warnmeldung und/oder Fehlermeldung, aus. Die Fehlermeldung kann insbesondere sein "Spalt in Fügeebene". Zusätzlich kann angegeben sein, in welcher Fügeebene der Spalt vorhanden ist. Dies ist insbesondere bei Mehrbauteilverbindungen vorteilhaft.

Danach ist das Verfahren von Fig. 10 beendet.

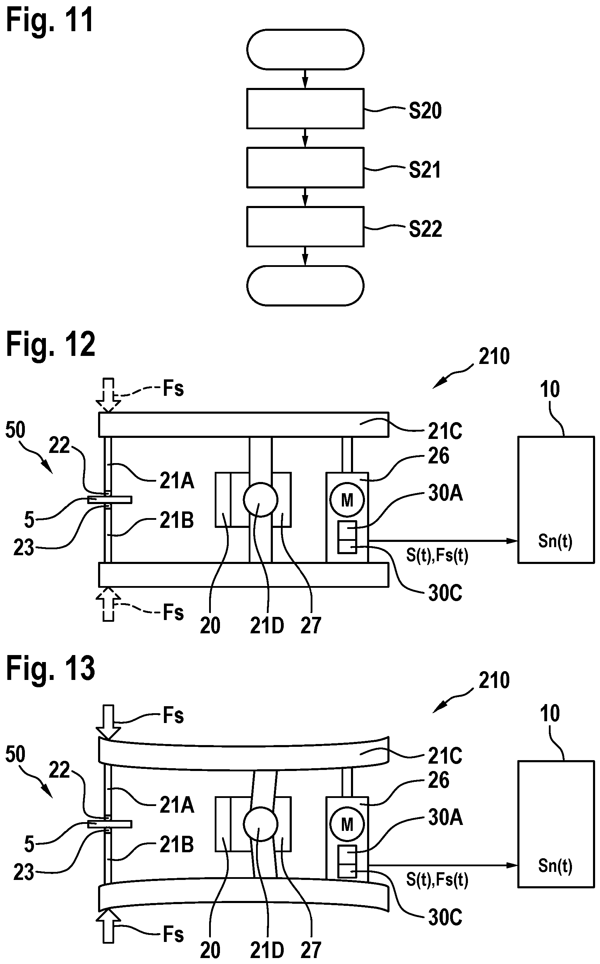

Fig. 11 zeigt ein Verfahren zum Durchführen einer Reinigung bzw. Servicevorgang mit der Reinigungseinrichtung 60.

Nach dem Start des Verfahrens wird bei einem Schritt S20 eine Kompensation des Einflusses der mechanischen Eigenschaften des Schweißwerkzeugs 21 oder der mechanischen Eigenschaften der Reinigungseinrichtung 60 (Fig. 2) durchgeführt. Hierfür geht die Schweißvorrichtung, insbesondere ihr Bestimmungsmodul 11 vor, wie in Bezug auf das Verfahren von Fig. 9 beschrieben. Demzufolge wird aus dem Echtzeit-Kraftsignal Fs(t) und dem Echtzeit-Wegsignal S(t) der Schweißzange (Schweißwerkzeug 21) der Einfluss des Schweißwerkzeugs 21 auf das Wegsignal S(t) berechnet und das kompensierte Wegsignal Sn(t) erzeugt. Die Steuervorrichtung 10 verwendet dann das kompensierte Wegsignal Sn(t) als weitere Führungsgröße bei der Kraftregelung des Schweißwerkzeugs 21 beim Reinigungsvorgang bzw. Servicevorgang. Danach geht der Fluss zu einem Schritt S21 weiter.

Bei dem Schritt S21 erfasst die Erfassungseinrichtung 30 einen Spanabtrag an den Elektrodenkappen 220, 230 (Fig. 2) aufgrund der Kraftregelung, welche die Steuervorrichtung 10, insbesondere ihr Kraftregelmodul 12, für das Schweißwerkzeug 21 bei einem Reinigungsvorgang bzw. Servicevorgang durchführt. Die Erfassung läuft, bis der vorbestimmte Spanabtrag erzielt ist. Danach geht der Fluss zu einem Schritt S22 weiter.

Bei dem Schritt S22 wird der Reinigungsvorgang bzw. Servicevorgang abgebrochen oder beendet.

Danach ist das Verfahren von Fig. 11 beendet.

Somit kann die Vorrichtung 10 als Arbeitsvorgang nicht nur einen Schweißvorgang, sondern auch einen Servicevorgang unter Berücksichtigung der mechanischen Zangeneigenschaften Z oder Zact des Schweißwerkzeugs 21 sehr vorteilhaft durchführen.

Fig. 12 und Fig. 13 zeigen ein Schweißwerkzeug 210, das gemäß einem zweiten Ausführungsbeispiel anstelle des Schweißwerkzeugs 21 von Fig. 1 bis Fig. 4 bei der Schweißanlage 2 von Fig. 1 verwendbar ist.

Fig. 12 zeigt einen Zustand, bei dem gilt Fs = 0 N. Dies ist vergleichbar zu dem Zustand des Werkzeugs 21 von Fig. 3. Fig. 13 zeigt einen Zustand, bei dem die vorbestimmte Anpress- und Haltekraft Fs auf die Elektroden 22, 23 wirkt. Dies ist vergleichbar zu dem Zustand des Werkzeugs 21 von Fig. 4.

Das Schweißwerkzeug 210 ist eine Schweißzange, die als eine X-Zange ausgebildet ist. Das Schweißwerkzeug 210 hat zwei Zangenarme 21A, 21B, die an einem feststehenden Gestell 21C oder einem Werkzeugführungssystem oder einer an einem festen Punkt gehaltenen Werkzeughalterung mit handgeführtem Werkzeug) angeordnet sind. Das Werkzeugführungssystem, ist beispielsweise die Vorrichtung 20 von Fig. 1, insbesondere ein Roboter. Beide Zangenarme 21A, 21B des Schweißwerkzeugs 210 sind bewegliche Arme.

Die Antriebseinrichtung 26 hat einen Motor mit integrierten Sensoren 30B, 30C für die Erfassungseinrichtung 30 (Fig. 1). Alternativ ist die Antriebseinrichtung 26 extern von dem Schweißwerkzeug 210 angeordnet. Der Sensor 30C ist ein Drehmomentsensor 30C zum Erfassen des Drehmoments M des Motors der Antriebseinrichtung 26. Das aufgewendete Drehmoment M des Motors ist proportional zur erzeugten Kraft Fs. Somit erfasst der Drehmomentsensor 30C indirekt die Kraft Fs, die auf die Arme 21, A, 21B und somit die Elektroden 22, 23 wirkt.

Auch bei dem Schweißwerkzeug 210 kommt es bei dem Zustand von Fig.13 zu einer Armaufbiegung bzw. einer Aufbiegung des Gestells 21C, wie im Vergleich mit Fig. 12 sichtbar.

Daher ist die Steuervorrichtung 10 ausgestaltet, auch für das Schweißwerkzeug 210 eine Kompensation des Echtzeit-Wegsignals S(t) vorzunehmen, wie in Bezug auf das erste Ausführungsbeispiel beschrieben.

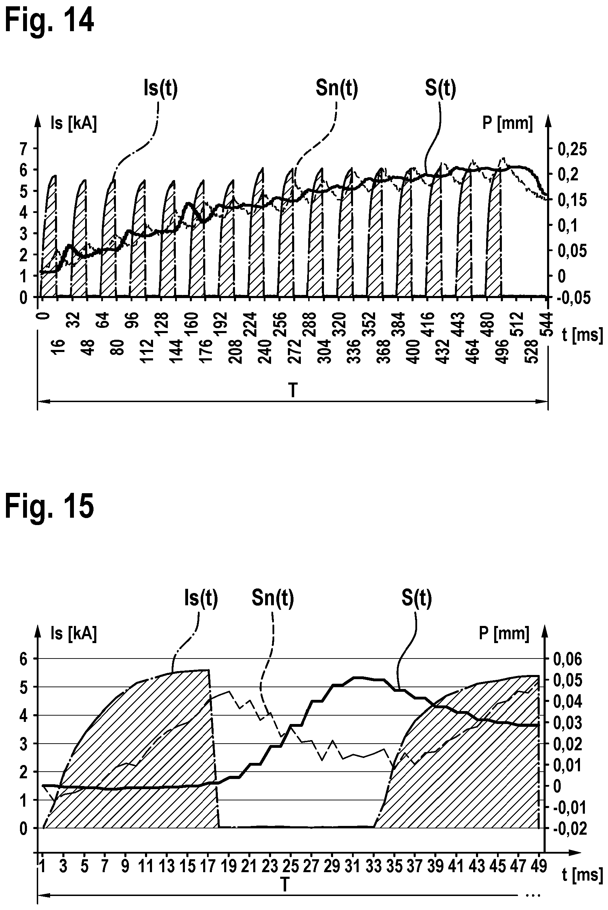

Die Steuervorrichtung 10 kann bei Bedarf zum Schweißen mit dem Schweißwerkzeug 210 ein kompensiertes bzw. normiertes Wegsignal Sn(t) erzeugen. Dadurch ergibt sich bei dem in Fig. 14 und Fig. 15 gezeigten Beispiel für einen Schweißstrom Is beispielsweise ein Verlauf der Wegsignale S(t), Sn(t), wie in Fig. 14 und Fig. 15 gezeigt. Fig. 14 und Fig. 15 entsprechen im Übrigen der Darstellung in Fig. 5 und Fig. 6, so das auf der Beschreibung verwiesen wird.

Hierbei ist die Steuervorrichtung 10 ausgestaltet, die Zangeneigenschaften Z, die zuvor für das Schweißwerkzeug 21 ermittelt wurden, bei der Ermittlung der Zangeneigenschaften Zact für das Schweißwerkzeug 210 zu verwenden.

Somit ist die Steuervorrichtung 10 ausgestaltet, die mechanischen Zangeneigenschaften Z, die zuvor für das Schweißwerkzeug 21 ermittelt wurden, auf das Schweißwerkzeug 210 zu übertragen.

Die Steuervorrichtung 10 kann zudem eine derartige Übertragung auch auf beliebige andere Zangensysteme und/oder ein beliebiges anderes zangenartiges Werkzeug ausführen. Insbesondere ist auch eine Übertragung auf ein C-Schweißwerkzeug möglich, bei welchem mindestens ein Element der Zangengeometrie im Vergleich zu dem Schweißwerkzeug 21 von Fig. 1 bis Fig. 4 geändert ist. Alternativ kann die Steuervorrichtung 10 die mechanischen Zangeneigenschaften Z, die durch eine solche Übertragung dann für das Schweißwerkzeug 210 ermittelt wurden, auf eine C-Zange oder ein sonstiges zangenartiges Werkzeug übertragen.

Dadurch ist bei der Inbetriebnahme der Schweißanlage 2 nur noch ein Schweißwerkzeug 21 oder 210 für die Steuervorrichtung 10 einzurichten. Im Ergebnis wird somit die Inbetriebnahme der Schweißanlage 2 deutlich vereinfacht. Daraus resultiert ein großer Vorteil gegenüber dem Stand der Technik, bei welchem eine Übertragung und Vergleich von Weg-Referenzkurven auf andere Zangensysteme nicht möglich ist, da sich die mechanischen Zangeneigenschaften (Krafterzeugung, Zangenaufbiegung, Zangenrückfederung etc.) im Wegsignal widerspiegeln und hierfür keine Kompensation vorgesehen ist.

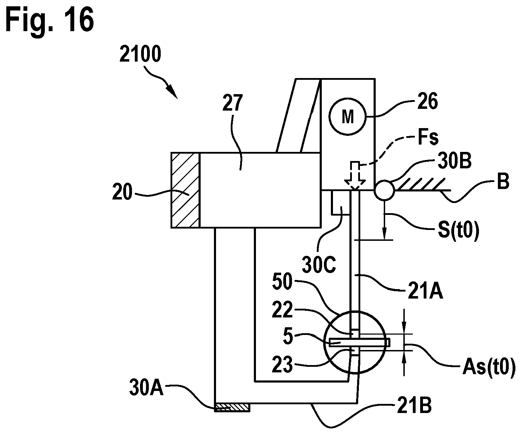

Fig. 16 zeigt ein Schweißwerkzeug 2100 gemäß einem dritten Ausführungsbeispiel, das anstelle des Schweißwerkzeugs 21 von Fig. 1 bis Fig. 4 bei der Schweißanlage 2 von Fig. 1 verwendbar ist. Die Schweißwerkzeuge 21, 2100 sind C-Schweißzangen.

Fig. 16 zeigt einen Zustand, bei dem gilt Fs = 0 N. Dies ist vergleichbar zu dem Zustand des Werkzeugs 21 von Fig. 3.

Bei dem Schweißwerkzeug 2100 hat die Erfassungseinrichtung 30 zusätzlich einen Drehmomentsensor 30C zum Erfassen des Drehmoments des Motors der Antriebseinrichtung 26. Der Drehmomentsensor 30C ist am beweglichen Zangenarm 30C angeordnet. Hierbei ist das aufgewendete Drehmoment des Motors M proportional zur erzeugten Kraft Fs. Somit erfasst der Drehmomentsensor 30C indirekt die Kraft Fs am beweglichen Arm 21A. Der Kraftsensor 30A erfasst dagegen direkt die Kraft Fs am feststehenden Arm 21A.

Als Folge davon kann das Zangensteifigkeitsmodell, das in der Steuervorrichtung 10 erzeugt wird, wie zuvor in Bezug auf insbesondere Fig. 7 beschrieben, getrennt auf den jeweiligen Zangarm 21A, 21B erweitert werden. Noch dazu wird es auf diese Weise ermöglicht, dass die Steuervorrichtung 10 eine detaillierte Abbildung, insbesondere Bestimmung, des Kraftflusses in der Fügestelle vornimmt und ein möglicher Kraftfluss in das zu fügende mindestens eine Bauteil 5, 6 abgebildet und damit bestimmt wird.

Damit hat die Steuervorrichtung 10 zusätzlich die Option zur Verbesserung der in Bezug auf die vorangehenden Ausführungsbeispiele beschriebenen Verfahren.

Versuche bezüglich der Kompensation des Zangeneinflusses auf die Kraftregelung mit der Steuervorrichtung 10, insbesondere ihrem Kraftregelmodul 12, zeigten, dass die Signalgüte signifikant verbessert werden konnte und das Bezugssystem 50 ("Abstand zwischen den Elektroden 22, 23") genauer abbildet bzw. bestimmt wird.

Infolgedessen kann jeder Schweißvorgang oder Servicevorgang zielführender überwacht und geregelt werden.

Darüber hinaus können die erfassten Signale Fs(t), S(t) und M(t) unabhängig von dem verwendeten zangenförmigen Werkzeug miteinander verglichen werden.

Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Optional kann bei den Schweißwerkzeugen 21, 2100 auf beiden Seiten, also nicht nur bei der Elektrode 22 oder nur bei der Elektrode 23, sondern über die beiden Elektroden 22, 23 eine entsprechende Einleitung von Kräften $F_s$ erfolgen.

Möglich ist außerdem, einen PD-Regler oder einen anderen Regler als einen PD-Regler für das Kraftregelmodul 12 zu verwenden. Hierbei ist es alternativ möglich, dass bei dem Kraftregelmodul 12 mehrere Regler hintereinandergeschaltet sind. Wird beispielsweise ein Zweipunktregler anstelle eines PD-Reglers verwendet, würde eine weniger dynamische und regelungstechnisch weniger vorteilhafte Lösung als mit einem PD-Regler geschaffen.

Das zangenförmige Werkzeug 21, 210, 210 muss keine Schweißzange sein, sondern kann eine Zange zum Durchführen eines anderen Arbeitsvorgangs, insbesondere Fügevorgangs sein. Ein Fügevorgang kann beispielsweise Clinchen oder Stanznieten sein.

Mit der Schweißzange von Fig. 3 oder 12 oder 16 kann zudem ein Fräsen der Elektroden 22, 23 mit der Reinigungsvorrichtung 60 durchgeführt werden, wie zuvor in Bezug auf Fig. 11 beschrieben.

Zudem kann ein zangenförmiges Werkzeug 21, 210, 210 für einen anderen Arbeitsvorgang verwendet werden, insbesondere einen Transport eines Gegenstands.

## Patentansprüche

1. Vorrichtung (10) zur Positionsregelung eines zangenförmigen Werkzeugs (21; 210; 2100), mit

   einem Bestimmungsmodul (11) zur Bestimmung eines normierten Wegsignals (Sn(t)), in dem eine Aufbiegung des zangenförmigen Werkzeugs (21; 210; 2100) kompensiert ist, die durch Einwirken einer mechanischen Kraft ($F_s$(t)) auf das Werkzeug (21; 210; 2100) bei einem Arbeitsvorgang (S2, S3, S4; S5; S8; S13; S17; S20) mit dem zangenförmigen Werkzeug (21; 210; 2100) über der Zeit (t) erzeugt wird, und
   einem Kraftregelmodul (12) zum Regeln eines Verlaufs der Kraft ($F_s$(t)), welche das zangenförmige Werkzeug (21; 210; 2100) bei dem Arbeitsvorgang (S2, S3, S4; S5; S8; S13; S17; S20) auf mindestens ein Bauteil (5, 6) ausübt,
   wobei das normierte Wegsignal (Sn(t)) Positionen (P) eines Wegs umfasst, den ein Element (21A, 21B; 22; 23) des zangenförmigen Werkzeugs (21; 210; 2100) bei dem Arbeitsvorgang (S8; S13; S17; S20) des zangenförmigen Werkzeugs (21; 210; 2100) zurückzulegen hat,
   wobei das Element (21A, 21B; 22; 23) des zangenförmigen Werkzeugs (21; 210; 2100) ein beweglicher Arm (21A, 21B) oder eine Elektrode (22; 23) des zangenförmigen Werkzeugs (21; 210; 2100) ist,
   wobei das Element (21A, 21B; 22; 23) bei dem Arbeitsvorgang (S8; S13; S17; S20) auf einen feststehenden Arm (21B) des zangenförmigen Werkzeugs (21; 210; 2100) zugestellt oder von dem feststehenden Arm (21B) wegbewegt/zurückgestellt wird, und,
   wobei das Kraftregelmodul (12) ausgestaltet ist, den Verlauf der Kraft ($F_s$(t)) bei dem Zustellen oder dem Wegbewegen / Zurückstellen des Elements bei dem Arbeitsvorgang (S8; S13; S17; S20) unter Verwendung des normierten Wegsignals (Sn(t)) zu regeln.

2. Vorrichtung (10) nach Anspruch 1, , wobei der Arbeitsvorgang ein Kraftskalieren (S5) ohne Bauteil (5, 6) ist oder eine Kurzschlussschweißung (S5) ohne Bauteil (5, 6) ist oder ein Reinigen (S20), insbesondere Fräsen, von Schweißelektrodenkappen (220, 230) des zangenförmigen Werkzeugs (21; 210; 2100) ist.

3. Vorrichtung (10) nach Anspruch 1,

   wobei der Arbeitsvorgang (S5; S8; S13; S17) ein Fügevorgang zum Herstellen einer Fügeverbindung (7) mit dem zangenförmigen Werkzeug (21; 210; 2100) ist, und
   wobei der Fügevorgang ein Schweißvorgang zum Herstellen einer Schweißverbindung (7) mit dem zangenförmigen Werkzeug (21; 210; 2100) ist und ein Strom- und/oder Kraftregelmodul (12), einen Schweißvorgang mit einer Schweißzeit (T) unter Verwendung des Kraftsignals Fs(t) und des normierten Wegsignals Sn(t) als Führungsgröße für eine Schweißstrom- und/oder Kraftregelung ausführt.

4. Vorrichtung (10) nach Anspruch 1,

wobei der Arbeitsvorgang (S5; S8; S13; S17) ein Fügevorgang zum Herstellen einer Fügeverbindung (7) mit dem zangenförmigen Werkzeug (21; 210; 2100) ist, und

wobei der Fügevorgang ein Nietvorgang oder ein Clinchvorgang ist.

5. Vorrichtung (10) nach Anspruch 4, wobei das Kraftregelmodul (12) ausgestaltet ist, den Verlauf der Kraft ($F_s$(t)) beim Herstellen der Fügeverbindung (7) unter Verwendung des normierten Wegsignals (Sn(t)) zu regeln.

6. Vorrichtung (10) nach einem der vorangehenden Ansprüche, wobei das Bestimmungsmodul (11) ausgestaltet ist, das normierte Wegsignal (Sn(t)) aus einem in Echtzeit erfassten Verlauf einer Kraft ($F_s$(t)) und einem in Echtzeit erfassten Weg zu bestimmen, den das Element (21A, 21B; 22; 23) des zangenförmigen Werkzeugs (21; 210; 2100) vor und/oder bei Durchführung eines Fügevorgangs zurücklegt.

7. Vorrichtung (10) nach einem der vorangehenden Ansprüche, wobei das Bestimmungsmodul (11) ausgestaltet ist, das normierte Wegsignal (Sn(t)) aus einem in Echtzeit erfassten Verlauf einer Kraft ($F_s$(t)) und einem in Echtzeit erfassten Weg zu bestimmen, den ein Element (21A, 21B; 22; 23) des zangenförmigen Werkzeugs (21; 210; 2100) zur Durchführung des Arbeitsvorgangs (S5; S8; S13; S17; S20) zurücklegt.

8. Vorrichtung (10) nach einem der vorangehenden Ansprüche, wobei das normierte Wegsignal (Sn(t)) Positionen (P) eines Wegs umfasst, den ein Element (21A, 21B; 22; 23) des zangenförmigen Werkzeugs (21; 210; 2100) zurückzulegen hat bei einem Fügevorgang, bei welchem eine Fügeverbindung (7) herzustellen ist, oder bei einem Servicevorgang (S5; S20, S21, S22), bei welchem das zangenförmige Werkzeug (21; 210; 2100) gereinigt oder in Betrieb gesetzt wird.

9. Vorrichtung (10) nach einem der vorangehenden Ansprüche,

wobei das Bestimmungsmodul (11) ausgestaltet ist, mechanische Zangeneigenschaften (Z) des zangenförmigen Werkzeugs (21; 210; 2100) zu berechnen, und

wobei das Bestimmungsmodul (11) ausgestaltet ist, die mechanischen Zangeneigenschaften (Z) zur Bestimmung des normierten Wegsignals (Sn(t)) aus dem in Echtzeit erfassten Verlauf einer Kraft ($F_s$(t)) und einem in Echtzeit für den Weg erfassten Wegsignal (S(t)) zu verwenden.

10. Vorrichtung (10) nach einem der vorangehenden Ansprüche,

wobei das Bestimmungsmodul (11) ausgestaltet ist, mechanische Zangeneigenschaften (Z) eines ersten zangenförmigen Werkzeugs (21) zu verwenden für die Bestimmung eines normierten Wegsignals (Sn(t)) eines zweiten zangenförmigen Werkzeugs (210; 2100), und

wobei sich die mechanischen Zangeneigenschaften (Zact) des zweiten zangenförmigen Werkzeugs (210; 2100) von den mechanischen Zangeneigenschaften (Z) des ersten zangenförmigen Werkzeugs (21) unterscheiden.

11. Vorrichtung (10) nach einem der vorangehenden Ansprüche,

wobei die Vorrichtung (10) zur Auswertung (S15) eines Steifigkeitsmodells (58) einer Fügestelle ausgestaltet ist, und

wobei die Vorrichtung (10) zum Abbruch des derzeit ausgeführten Arbeitsvorgangs (S14) ausgestaltet ist, wenn die Auswertung des Steifigkeitsmodells (58) der Fügestelle ergibt, dass mindestens eine Störgröße (8) und/oder ein vorbestimmter Zangenverschleiß vorhanden sind/ist.

12. Vorrichtung (10) nach Anspruch 11, wobei die Vorrichtung (10) ausgestaltet ist, eine Meldung (48) auszugeben, wenn die Auswertung (S15) des Steifigkeitsmodells (58) der Fügestelle ergibt, dass mindestens eine Störgröße (8) und/oder ein vorbestimmter Zangenverschleiß vorhanden sind/ist.

13. Schweißanlage (2), mit

einem Schweißwerkzeug (21; 210; 2100), das eine Schweißzange mit zwei Elektroden (22, 23) zum Herstellen einer Schweißverbindung (7) an mindestens einem Bauteil (5, 6) ist,

einer Antriebseinrichtung (26) zum Antrieb des Schweißwerkzeugs (21; 210; 2100) zum Aufbringen einer Kraft ($F_s$(t)), welche die zwei Elektroden (22, 23) beim Herstellen einer Schweißverbindung (7) auf das mindestens ein Bauteil (5, 6) ausüben,

mindestens einem Kraftsensor (30A; 30C), der an einem feststehenden Arm (21B) des Schweißwerkzeugs (21; 210; 2100) und/oder an einem beweglichen Arm (21A) des Schweißwerkzeug (21; 210; 2100) angebracht ist, wobei der bewegliche Arm (21A) relativ zu dem feststehenden Arm (21B) beweglich ist, und einer Vorrichtung (10) nach einem der vorangehenden Ansprüche.

14. Verfahren zur Positionsregelung eines zangenförmigen Werkzeugs, wobei das Verfahren die Schritte aufweist

Bestimmen (S8; S13; S14), mit einem Bestimmungsmodul (11), eines normierten Wegsignals (Sn(t)), in dem eine Aufbiegung des zangenförmigen Werkzeugs (21; 210; 2100) kompensiert ist, die durch Einwirken einer mechanischen Kraft ($F_s$(t)) auf das Werkzeug (21; 210; 2100) bei einem Arbeitsvorgang (S8; S13; S14; S21) mit dem zangenförmigen Werkzeug (21; 210; 2100) über der Zeit (t) erzeugt wird, und

Regeln (S2, S3, S4; S8; S13; S14), mit einem Kraftregelmodul (12), eines Verlaufs der Kraft ($F_s$(t)), welche das zangenförmige Werkzeug (21; 210; 2100) bei dem Arbeitsvorgang (S8; S13; S14; S21) auf mindestens ein Bauteil (5, 6) ausübt,

wobei das normierte Wegsignal (Sn(t)) Positionen (P) eines Wegs umfasst, den ein Element (21A, 21B; 22; 23) des zangenförmigen Werkzeugs (21; 210; 2100) bei dem Arbeitsvorgang (S8; S13; S17; S20) des zangenförmigen Werkzeugs (21; 210; 2100) zurückzulegen hat,

wobei das Element (21A, 21B; 22; 23) des zangenförmigen Werkzeugs (21; 210; 2100) ein beweglicher Arm (21A, 21B) oder eine Elektrode (22; 23) des zangenförmigen Werkzeugs (21; 210; 2100) ist,

wobei das Element (21A, 21B; 22; 23) bei dem Arbeitsvorgang (S8; S13; S17; S20) auf einen feststehenden Arm (21B) des zangenförmigen Werkzeugs (21; 210; 2100) zugestellt oder von dem feststehenden Arm (21B) wegbewegt/zurückgestellt wird, und,

wobei das Kraftregelmodul (12) ausgestaltet ist, den Verlauf der Kraft ($F_s$(t)) bei dem Zustellen oder dem Wegbewegen / Zurückstellen des Elements bei dem Arbeitsvorgang (S8; S13; S14; S21) unter Verwendung des normierten Wegsignals (Sn(t)) zu regeln.

15. Verfahren nach Anspruch 14, wobei der Schritt des Bestimmens und der Schritt des Regelns zumindest zeitweise bei der Durchführung des Arbeitsvorgangs (S8; S13; S14; S21) durchgeführt werden.

## Claims

1. A device (10) for position control of a plier-shaped tool (21; 210; 2100), with a determination module (11) for determining a normed path signal (Sn(t)), in which a deflection of the plier-shaped tool (21; 210; 2100) is compensated, which is generated by the action of a mechanical force (Fs(t)) on the tool (21; 210; 2100) during a work process (S2, S3, S4; S5; S8; S13; S17; S20) with the plier-shaped tool (21; 210; 2100) over time (t), and a force control module (12) for controlling a profile of the force (Fs(t)), which the plier-shaped tool (21; 210; 2100) exerts on at least one component (5, 6) during the work process (S2, S3, S4; S5; S8; S13; S17; S20), wherein the normed path signal (Sn(t)) comprises positions (P) of a path that an element (21A, 21B; 22; 23) of the plier-shaped tool (21; 210; 2100) has to travel during the work process (S8; S13; S17; S20) of the plier-shaped tool (21; 210; 2100), wherein the element (21A, 21B; 22; 23) of the plier-shaped tool (21; 210; 2100) is a movable arm (21A, 21B) or an electrode (22; 23) of the plier-shaped tool (21; 210; 2100), wherein the element (21A, 21B; 22; 23) during the work process (S8; S13; S17; S20) is advanced to or moved away/retracted from a fixed arm (21B) of the plier-shaped tool (21; 210; 2100), and, wherein the force control module (12) is configured to control the profile of the force (Fs(t)) during the advancing or moving away / retracting of the element during the work process (S8; S13; S17; S20) using the normed path signal (Sn(t)).

2. The device (10) according to claim 1, wherein the work process is a force scaling (S5) without a component (5, 6), or is a short-circuit welding (S5) without a component (5, 6), or is a cleaning (S20), in particular milling, of welding electrode caps (220, 230) of the plier-shaped tool (21; 210; 2100).

3. The device (10) according to claim 1, wherein the work process (S5; S8; S13; S17) is a joining process for producing a joining connection (7) with the plier-shaped tool (21; 210; 2100), and wherein the joining process is a welding process for producing a welding connection (7) with the plier-shaped tool (21; 210; 2100) and a current and/or force control module (12) executes a welding process with a welding time (T) using the force signal Fs(t) and the normed path signal Sn(t) as a control variable for a welding current and/or force control.

4. The device (10) according to claim 1,

wherein the work process (S5; S8; S13; S17) is a joining process for producing a joining connection (7) with the plier-shaped tool (21; 210; 2100), and wherein the joining process is a riveting process or a clinching process.

5. The device (10) according to claim 4, wherein the force control module (12) is configured to control the profile of the force (Fs(t)) during the production of the joining connection (7) using the normed path signal (Sn(t)).

6. The device (10) according to any one of the preceding claims, wherein the determination module (11) is configured to determine the normed path signal (Sn(t)) from a real-time recorded profile of a force (Fs(t)) and a real-time recorded path that the element (21A, 21B; 22; 23) of the plier-shaped tool (21; 210; 2100) travels before and/or during the execution of a joining process.

7. The device (10) according to any one of the preceding claims, wherein the determination module (11) is configured to determine the normed path signal (Sn(t)) from a real-time recorded profile of a force (Fs(t)) and a real-time recorded path that an element (21A, 21B; 22; 23) of the plier-shaped tool (21; 210; 2100) travels for executing the work process (S5; S8; S13; S17; S20).

8. The device (10) according to any one of the preceding claims, wherein the normed path signal (Sn(t)) comprises positions (P) of a path that an element (21A, 21B; 22; 23) of the plier-shaped tool (21; 210; 2100) has to travel, during a joining process, in which a joining connection (7) is to be produced, or during a service process (S5; S20; S21; S22), in which the plier-shaped tool (21; 210; 2100) is cleaned or put into operation.

9. The device (10) according to any one of the preceding claims, wherein the determination module (11) is configured to calculate mechanical plier properties (Z) of the plier-shaped tool (21; 210; 2100), and wherein the determination module (11) is configured to use the mechanical plier properties (Z) for determining the normed path signal (Sn(t)) from the real-time recorded profile of a force (Fs(t)) and a path signal (S(t)) recorded in real time for the path.

10. The device (10) according to any one of the preceding claims, wherein the determination module (11) is configured to use mechanical plier properties (Z) of a first plier-shaped tool (21) for the determination of a normed path signal (Sn(t)) of a second plier-shaped tool (210; 2100), and wherein the mechanical plier properties (Zact) of the second plier-shaped tool (210; 2100) differ from the mechanical plier properties (Z) of the first plier-shaped tool (21).

11. The device (10) according to any one of the preceding claims, wherein the device (10) is configured for evaluating (S15) a stiffness model (58) of a joining point, and wherein the device (10) is configured to abort the currently executed work process (S14) if the evaluation of the stiffness model (58) of the joining point indicates that at least one disturbance variable (8) and/or a predetermined plier wear is/are present.

12. The device (10) according to claim 11, wherein the device (10) is configured to issue a message (48) if the evaluation (S15) of the stiffness model (58) of the joining point indicates that at least one disturbance variable (8) and/or a predetermined plier wear is/are present.

13. A welding system (2), with a welding tool (21; 210; 2100), which is a welding gun with two electrodes (22, 23) for producing a welding connection (7) on at least one component (5, 6), a drive device (26) for driving the welding tool (21; 210; 2100) to apply a force (Fs(t)), which the two electrodes (22, 23) exert on the at least one component (5, 6) when producing a welding connection (7), at least one force sensor (30A; 30C), which is attached to a fixed arm (21B) of the welding tool (21; 210; 2100) and/or to a movable arm (21A) of the welding tool (21; 210; 2100), wherein the movable arm (21A) is movable relative to the fixed arm (21B), and a device (10) according to any one of the preceding claims.

14. A method for position control of a plier-shaped tool, wherein the method comprises the steps of Determining (S8; S13; S14), with a determination module (11), a normed path signal (Sn(t)), in which a deflection of the plier-shaped tool (21; 210; 2100) is compensated, which is generated by the action of a mechanical force (Fs(t)) on the tool (21; 210; 2100) during a work process (S8; S13; S14; S21) with the plier-shaped tool (21; 210; 2100) over time (t), and Controlling (S2, S3, S4; S8; S13; S14), with a force control module (12), a profile of the force (Fs(t)), which the plier-shaped tool (21; 210; 2100) exerts on at least one component (5, 6) during the work process (S8; S13; S14; S21), wherein the normed path signal (Sn(t)) comprises positions (P) of a path that an element (21A, 21B; 22; 23) of the plier-shaped tool (21; 210; 2100) has to travel during the work process (S8; S13; S17; S20) of the plier-shaped tool (21; 210; 2100), wherein the element (21A, 21B; 22; 23) of the plier-shaped tool (21; 210; 2100) is a movable arm (21A, 21B) or an electrode (22; 23) of the plier-shaped tool (21; 210; 2100), wherein the element (21A, 21B; 22; 23) during the work process (S8; S13; S17; S20) is advanced to or moved away/retracted from a fixed arm (21B) of the plier-shaped tool (21; 210; 2100), and, wherein the force control module (12) is configured to control the profile of the force (Fs(t)) during the advancing or moving away / retracting of the element during the work process (S8; S13; S14; S21) using the normed path signal (Sn(t)).

15. The method according to claim 14, wherein the step of determining and the step of controlling are performed at least temporarily during the execution of the work process (S8; S13; S14; S21).

**Revendications**

1. Dispositif (10) de réglage de position d'un outil en forme de pince (21 ; 210 ; 2100), avec un module de détermination (11) pour déterminer un signal de trajet normé (Sn(t)), dans lequel une flexion de l'outil en forme de pince (21 ; 210 ; 2100) est compensée, laquelle est générée par l'action d'une force mécanique (Fs(t)) sur l'outil (21 ; 210 ; 2100) lors d'une opération de travail (S2, S3, S4 ; S5 ; S8 ; S13 ; S17 ; S20) avec l'outil en forme de pince (21 ; 210 ; 2100) au cours du temps (t), et un module de régulation de force (12) pour réguler une évolution de la force (Fs(t)), que l'outil en forme de pince (21 ; 210 ; 2100) exerce sur au moins un composant (5, 6) lors de l'opération de travail (S2, S3, S4 ; S5 ; S8 ; S13 ; S17 ; S20), dans lequel le signal de trajet normé (Sn(t)) comprend des positions (P) d'un trajet qu'un élément (21A, 21B ; 22 ; 23) de l'outil en forme de pince (21 ; 210 ; 2100) doit parcourir lors de l'opération de travail (S8 ; S13 ; S17 ; S20) de l'outil en forme de pince (21 ; 210 ; 2100), dans lequel l'élément (21A, 21B ; 22 ; 23) de l'outil en forme de pince (21 ; 210 ; 2100) est un bras mobile (21A, 21B) ou une électrode (22 ; 23) de l'outil en forme de pince (21 ; 210 ; 2100), dans lequel l'élément (21A, 21B ; 22 ; 23) lors de l'opération de travail (S8 ; S13 ; S17 ; S20) est approché d'un bras fixe (21B) de l'outil en forme de pince (21 ; 210 ; 2100) ou est éloigné/rétracté de celui-ci, et, dans lequel le module de régulation de force (12) est configuré pour réguler l'évolution de la force (Fs(t)) lors de l'approche ou de l'éloignement / de la rétraction de l'élément lors de l'opération de travail (S8 ; S13 ; S17 ; S20) en utilisant le signal de trajet normé (Sn(t)).

2. Dispositif (10) selon la revendication 1, dans lequel l'opération de travail est un calibrage de force (S5) sans composant (5, 6), ou est un soudage par court-circuit (S5) sans composant (5, 6), ou est un nettoyage (S20), en particulier un fraisage, de calottes d'électrodes de soudage (220, 230) de l'outil en forme de pince (21 ; 210 ; 2100).

3. Dispositif (10) selon la revendication 1,
dans lequel l'opération de travail (S5 ; S8 ; S13 ; S17) est une opération d'assemblage pour produire une liaison d'assemblage (7) avec l'outil en forme de pince (21 ; 210 ; 2100), et dans lequel l'opération d'assemblage est une opération de soudage pour produire une liaison de soudage (7) avec l'outil en forme de pince (21 ; 210 ; 2100) et un module de régulation de courant et/ou de force (12) exécute une opération de soudage avec un temps de soudage (T) en utilisant le signal de force Fs(t) et le signal de trajet normé Sn(t) comme grandeur de commande pour une régulation de courant de soudage et/ou de force.

4. Dispositif (10) selon la revendication 1,
dans lequel l'opération de travail (S5 ; S8 ; S13 ; S17) est une opération d'assemblage pour produire une liaison d'assemblage (7) avec l'outil en forme de pince (21 ; 210 ; 2100), et dans lequel l'opération d'assemblage est une opération de rivetage ou une opération de clinchage.

5. Dispositif (10) selon la revendication 4, dans lequel le module de régulation de force (12) est configuré pour réguler l'évolution de la force (Fs(t)) lors de la production de la liaison d'assemblage (7) en utilisant le signal de trajet normé (Sn(t)).

6. Dispositif (10) selon l'une quelconque des revendications précédentes, dans lequel le module de détermination (11) est configuré pour déterminer le signal de trajet normé (Sn(t)) à partir d'une évolution d'une force (Fs(t)) enregistrée en temps réel et d'un trajet enregistré en temps réel que l'élément (21A, 21B ; 22 ; 23) de l'outil en forme de pince (21 ; 210 ; 2100) parcourt avant et/ou pendant l'exécution d'une opération d'assemblage.

7. Dispositif (10) selon l'une quelconque des revendications précédentes, dans lequel le module de détermination (11) est configuré pour déterminer le signal de trajet normé (Sn(t)) à partir d'une évolution d'une force (Fs(t)) enregistrée en temps réel et d'un trajet enregistré en temps réel qu'un élément (21A, 21B ; 22 ; 23) de l'outil en forme de pince (21 ; 210 ; 2100) parcourt pour l'exécution de l'opération de travail (S5 ; S8 ; S13 ; S17 ; S20).

8. Dispositif (10) selon l'une quelconque des revendications précédentes, dans lequel le signal de trajet normé (Sn(t)) comprend des positions (P) d'un trajet qu'un élément (21A, 21B ; 22 ; 23) de l'outil en forme de pince (21 ; 210 ; 2100) doit parcourir, lors d'une opération d'assemblage au cours de laquelle une liaison d'assemblage (7) doit être produite, ou lors d'une opération de service (S5 ; S20 ; S21 ; S22) au cours de laquelle l'outil en forme de pince (21 ; 210 ; 2100) est nettoyé ou mis en service.

9. Dispositif (10) selon l'une quelconque des revendications précédentes, dans lequel le module de détermination (11) est configuré pour calculer des propriétés mécaniques de pince (Z) de l'outil en forme de pince (21 ; 210 ; 2100), et dans lequel le module de détermination (11) est configuré pour utiliser les propriétés mécaniques de pince (Z) pour la détermination du signal de trajet normé (Sn(t)) à partir de l'évolution de la force (Fs(t)) enregistrée en temps réel et d'un signal de trajet (S(t)) enregistré en temps réel pour le trajet.

10. Dispositif (10) selon l'une quelconque des revendications précédentes, dans lequel le module de détermination (11) est configuré pour utiliser des propriétés mécaniques de pince (Z) d'un premier outil en forme de pince (21) pour la détermination d'un signal de trajet normé (Sn(t)) d'un deuxième outil en forme de pince (210 ; 2100), et dans lequel les propriétés mécaniques de pince (Zact) du deuxième outil en forme de pince (210 ; 2100) diffèrent des propriétés mécaniques de pince (Z) du premier outil en forme de pince (21).

11. Dispositif (10) selon l'une quelconque des revendications précédentes, dans lequel le dispositif (10) est configuré pour l'évaluation (S15) d'un modèle de rigidité (58) d'un point d'assemblage, et dans lequel le dispositif (10) est configuré pour interrompre l'opération de travail actuellement exécutée (S14) si l'évaluation du modèle de rigidité (58) du point d'assemblage révèle qu'au moins une grandeur perturbatrice (8) et/ou une usure prédéterminée de la pince est/sont présente(s).

12. Dispositif (10) selon la revendication 11, dans lequel le dispositif (10) est configuré pour émettre un message (48) si l'évaluation (S15) du modèle de rigidité (58) du point d'assemblage révèle qu'au moins une grandeur perturbatrice (8) et/ou une usure prédéterminée de la pince est/sont présente(s).

13. Installation de soudage (2), avec
un outil de soudage (21 ; 210 ; 2100), qui est une pince à souder avec deux électrodes (22, 23) pour produire une liaison de soudage (7) sur au moins un composant (5, 6), un dispositif d'entraînement (26) pour entraîner l'outil de soudage (21 ; 210 ; 2100) afin d'appliquer une force (Fs(t)), que les deux électrodes (22, 23) exercent sur l'au moins un composant (5, 6) lors de la production d'une liaison de soudage (7), au moins un capteur de force (30A ; 30C), qui est monté sur un bras fixe (21B) de l'outil de soudage (21 ; 210 ; 2100) et/ou sur un bras mobile (21A) de l'outil de soudage (21 ; 210 ; 2100), dans lequel le bras mobile (21A) est mobile par rapport au bras fixe (21B), et un dispositif (10) selon l'une quelconque des revendications précédentes.

14. Procédé de réglage de position d'un outil en forme de pince, dans lequel le procédé comprend les étapes suivantes Déterminer (S8 ; S13 ; S14), avec un module de détermination (11), un signal de trajet normé (Sn(t)), dans lequel une flexion de l'outil en forme de pince (21 ; 210 ; 2100) est compensée, laquelle est générée par l'action d'une force mécanique (Fs(t)) sur l'outil (21 ; 210 ; 2100) lors d'une opération de travail (S8 ; S13 ; S14 ; S21) avec l'outil en forme de pince (21 ; 210 ; 2100) au cours du temps (t), et Réguler (S2, S3, S4 ; S8 ; S13 ; S14), avec un module de régulation de force (12), une évolution de la force (Fs(t)), que l'outil en forme de pince (21 ; 210 ; 2100) exerce sur au moins un composant (5, 6) lors de l'opération de travail (S8 ; S13 ; S14 ; S21), dans lequel le signal de trajet normé (Sn(t)) comprend des positions (P) d'un trajet qu'un élément (21A, 21B ; 22 ; 23) de l'outil en forme de pince (21 ; 210 ; 2100) doit parcourir lors de l'opération de travail (S8 ; S13 ; S17 ; S20) de l'outil en forme de pince (21 ; 210 ; 2100), dans lequel l'élément (21A, 21B ; 22 ; 23) de l'outil en forme de pince (21 ; 210 ; 2100) est un bras mobile (21A, 21B) ou une électrode (22 ; 23) de l'outil en forme de pince (21 ; 210 ; 2100), dans lequel l'élément (21A, 21B ; 22 ; 23) lors de l'opération de travail (S8 ; S13 ; S17 ; S20) est approché d'un bras fixe (21B) de l'outil en forme de pince (21 ; 210 ; 2100) ou est éloigné/rétracté de celui-ci, et, dans lequel le module de régulation de force (12) est configuré pour réguler l'évolution de la force (Fs(t)) lors de l'approche ou de l'éloignement / de la rétraction de l'élément lors de l'opération de travail (S8 ; S13 ; S14 ; S21) en utilisant le signal de trajet normé (Sn(t)).

15. Procédé selon la revendication 14, dans lequel l'étape de détermination et l'étape de régulation sont effectuées au moins temporairement pendant l'exécution de l'opération de travail (S8 ; S13 ; S14 ; S21).

# Fig. 1

# Fig. 2

# Fig. 3

# Fig. 4

## Fig. 5

## Fig. 6

Fig. 7

# Fig. 8

# Fig. 9

# Fig. 10

**Fig. 11**

**Fig. 12**

**Fig. 13**

# Fig. 14

# Fig. 15

**Fig. 16**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60206893 T2
- DE 102015013987 A1